Europäisches Patentamt

European Patent Office

Office européen des brevets

(19)

(11) **EP 0 901 857 B1**

(12) **EUROPÄISCHE PATENTSCHRIFT**

(45) Veröffentlichungstag und Bekanntmachung des Hinweises auf die Patenterteilung:
**14.03.2001 Patentblatt 2001/11**

(51) Int Cl.⁷: **B23B 29/24**

(21) Anmeldenummer: **98115480.0**

(22) Anmeldetag: **18.08.1998**

(54) **Werkzeugrevolver für eine Werkzeugmaschine sowie Drehmaschine mit einem solchen Werkzeugrevolver**

Tool revolver for machine tool and lathe having such a revolver

Tourelle porte outil pour machine outil ainsi que tour ayant une telle tourelle

(84) Benannte Vertragsstaaten:
**CH DE FR IT LI**

(30) Priorität: **13.09.1997 DE 19740379**

(43) Veröffentlichungstag der Anmeldung:
**17.03.1999 Patentblatt 1999/11**

(73) Patentinhaber: **INDEX-WERKE GMBH & CO. KG HAHN & TESSKY**
**73730 Esslingen (DE)**

(72) Erfinder:
• **Link, Helmut Friedrich**
**73773 Aichwald (DE)**
• **Grossmann, Walter**
**73666 Baltmannsweiler (DE)**

(74) Vertreter: **Hoeger, Stellrecht & Partner**
**Uhlandstrasse 14 c**
**70182 Stuttgart (DE)**

(56) Entgegenhaltungen:
**DE-B- 2 436 220** **US-A- 2 685 122**
**US-A- 4 297 925**

**Beschreibung**

Die Erfindung betrifft einen Werkzeugrevolver für eine Werkzeugmaschine gemäß dem Oberbegriff des Anspruchs 1. Die US-A-4 297 925 ist als nächstliegender Stand der Technik anzusehen.

Werkzeugrevolver haben einen mit mehreren Bearbeitungswerkzeugen bestückbaren Revolverkopf und eine meist als Revolvergehäuse bezeichnete Revolverkopf-Tragvorrichtung, an bzw. in der der Revolverkopf um eine Revolverschaltachse drehbar gelagert ist und in mehreren Winkelpositionen verriegelt werden kann; mittels eines von der Werkzeugmaschinensteuerung gesteuerten Schaltantriebs läßt sich der entriegelte Revolverkopf um die Revolverschaltachse drehen, um ein Werkzeug in Arbeitsstellung zu bringen, worauf der Revolverkopf am Revolvergehäuse wieder verriegelt wird. Ein solcher Revolverkopf hat mehrere Werkzeugstationen, deren jede eine Werkzeugaufnahme zum Einspannen eines auswechselbaren Werkzeughalters für ein Bearbeitungswerkzeug besitzt. Durch Drehen des Revolverkopfsum seine Schaltachse lassen sich also alle Bearbeitungswerkzeuge in einer beliebigen, von der Werkzeugmaschinensteuerung vorgegebenen Reihenfolge nacheinander in Arbeitsstellung und dann zum Einsatz bringen. Die Erfindung betrifft aber auch derartige Werkzeugrevolver, deren Revolverkopf sich während des Arbeitens eines Werkzeugs, wie eines Fräsers, um seine Schaltachse kontinuierlich drehen läßt.

Bei den Bearbeitungswerkzeugen kann es sich um während der Bearbeitung bezüglich des Revolverkopfs stillstehende Werkzeuge, wie Drehmeißel und Bohrstangen, handeln, aber auch - wie bereits angedeutet - um während der Werkstückbearbeitung um eine Werkzeugachse rotierende Werkzeuge, wie Bohrer, Fräser, Gewindeschneidwerkzeuge und dergleichen. Bei den zuletzt genannten drehantreibbaren Werkzeugen wird das eigentliche Werkzeug von einer im Werkzeughalter drehbar gelagerten Werkzeugantriebswelle angetrieben, welche, wenn der Werkzeughalter in eine Werkzeugaufnahme des Revolverkopfs eingespannt ist, in einen Hohlraum des Revolverkopfs hineinragt und mit einer Antriebswelle einer Werkzeug-Antriebsvorrichtung des Werkzeugrevolvers gekuppelt werden kann. Nichtangetriebene Werkzeuge verfügen hingegen nicht über ein Element, welches mit einer solchen Antriebswelle der Werkzeug-Antriebsvorrichtung zu kuppeln ist.

Die Schnittstelle zwischen Werkzeug und Revolverkopf ist in den meisten Fällen gemäß einer Norm ausgebildet, z. B. gemäß DIN 69880 oder DIN 69893, und diese Norm bestimmt sowohl die Gestaltung des Werkzeughalters, als auch diejenige der Werkzeugaufnahmen der Werkzeugstationen des Revolverkopfs.

Klassische Revolverkopfformen sind der Sternrevolver, der Scheibenrevolver und der Kronenrevolver. Beim Sternrevolver und beim Scheibenrevolver hat der Revolverkopf die Form einer zur Revolverschaltachse senkrechten und koaxialen Scheibe, an deren Umfang die Werkzeugaufnahmen angeordnet sind; beim Sternrevolver verläuft die Revolverschaltachse senkrecht zu einer die Richtung einer Z-Achse der Drehmaschine definierenden Rotationsachse einer ein zu bearbeitendes Werkstück haltenden Werkstückspindel, während beim Scheibenrevolver die Revolverschaltachse parallel zur Z-Achse verläuft. Infolgedessen erstrecken sich z. B. nicht angetriebene Bohrer bei einem Sternrevolver bezüglich dessen Schaltachse in radialer Richtung vom Revolverkopf weg, bei einem Scheibenrevolver hingegen in Richtung seiner Schaltachse. Bei Kronenrevolvern verläuft die Schaltachse schräg zur Richtung der Z-Achse, bei klassischen Kronenrevolvern hat der Revolverkopf die Gestalt eines Kegel- oder Pyramidenstumpfs mit der Revolverschaltachse als Kegel- bzw. Pyramidenachse, an dessen Umfang die Werkzeugaufnahmen für die Werkzeughalter angeordnet sind, und ein sich in Arbeitsposition befindliches nicht-angetriebenes Werkzeug, wie beispielsweise ein Bohrer, ragt in Richtung der Z-Achse und damit in einer schräg zur Revolverschaltachse verlaufenden Richtung weg vom Umfang des Revolverkopfs. In allen drei Fällen kann der Revolverkopf an seinem Umfang für jede Werkzeugstation eine ebene Anlagefläche für den dort anzubringenden Werkzeughalter aufweisen, von der eine senkrecht zu dieser Anlagefläche orientierte Bohrung zur Aufnahme eines meist zylindrischen Schafts des Werkzeughalters in den Revolverkopfkörper hineinragt.

Aus den vorstehenden Erläuterungen der drei klassischen Revolvertypen ergibt sich folgendes:

Beim Sternrevolver hat die von der Spitze des längsten Werkzeugs beim Drehen des Revolverkopfs durchlaufene Kreisbahn (deren Radius üblicherweise als Durchschaltradius bezeichnet wird) einen sehr großen Durchmesser, was zu einer erheblichen Baulänge der mit einem solchen Sternrevolver ausgestatteten Drehmaschine führt. Dies wirkt sich insbesondere auf die Baulänge sogenannter Gegenspindelmaschinen (Drehmaschinen mit zwei koaxialen, sich mit einander zugewandten Werkstückspannvorrichtungen gegenüberliegenden Werkstückspindeln) negativ aus. Des weiteren werden die von einem Sternrevolver getragenen Werkzeuge durch die beim Arbeiten auf die Werkzeuge einwirkenden Kräfte um die Achse der betreffenden Werkzeugaufnahme verdreht und/oder gebogen, woraus Ungenauigkeiten der Geometrie der bearbeiteten Werkstücke resultieren.

Der letztgenannte Nachteil tritt auch bei Scheibenrevolvern auf: Ein sogenanntes Innenbearbeitungswerkzeug, wie ein Bohrer oder eine Bohrstange, neigt dazu, unter der Wirkung der beim Arbeiten auf das Werkzeug einwirkenden Kräfte in der Werkzeugaufnahme verdreht zu werden, da ein Scheibenrevolver in Richtung der Z-Achse lange, abstehende Werkzeuge erforderlich macht, wodurch beim Arbeiten große Momente auf das Werkzeug einwirken, welche letzteres aus seiner Sollposition abzudrängen versuchen. Auch macht ein Scheibenrevolver für das Arbeiten an der Stirnseite eines Werkstücks mit einem angetriebenen Werkzeug, wie einem rotierenden Bohrer, einen Werkzeughalter erforderlich, welcher ein kostspieliges Winkelgetriebe für den Werkzeugantrieb enthält. Schließlich müssen solche Werkzeughalter mit großem Aufwand präzise ausgerichtet werden.

Ein Kronenrevolver hat einen vorteilhaft kleinen Durchschaltradius, jedoch tendieren, ähnlich wie beim Sternrevolver, sogenannte Außenbearbeitungswerkzeuge, also z. B. ein Drehmeißel zur Verkleinerung des Außendurchmessers eines Werkstücks, unter den Bearbeitungskräften dazu, um die Achse ihrer Werkzeugaufnahme verdreht zu werden. Für Bohr- und Fräsarbeiten an der Umfangsfläche eines Werkstücks müssen außerdem angetriebene Werkzeuge eingesetzt werden, deren Werkzeughalter ein aufwendiges Winkelgetriebe enthält. Schließlich läßt sich ein Kronenrevolver bei einer Gegenspindelmaschine nur unter Inkaufnahme erheblicher Nachteile einsetzen - es werden abgewinkelte und daher aufwendige Werkzeughalter erforderlich, und es müssen problematische Hebelverhältnisse am arbeitenden Werkzeug in Kauf genommen werden, welche nur geringe Zerspanungskräfte zulassen.

Der Erfindung lag die Aufgabe zugrunde, einen Werkzeugrevolver zu entwickeln, der es erlaubt, die Geometrie des Arbeitsraums einer Werkzeugmaschine möglichst günstig zu gestalten, und es gleichzeitig zuläßt, alle denkbaren Zerspanungsprozesse, die heute auf einer Drehmaschine durchgeführt werden, mit geringstmöglichem Aufwand und möglichst kurzen Umrüstzeiten durchzuführen.

Aus der Druckschrift "INDEX G30/150NC" der Index-Werke GmbH & Co. KG Hahn & Tessky ist eine Drehmaschine bekannt geworden, welche eine in einem Spindelstock um eine die Richtung einer Z-Achse der Drehmaschine definierende Spindelachse drehbar gelagerte Werkstückspindel besitzt, an deren dem Arbeitsraum dieser Drehmaschine zugekehrten Ende eine Werkstückspannvorrichtung zum Halten eines zu bearbeitenden Werkstücks angebracht ist. Ein von einem Maschinenbett der Drehmaschine getragenes Kreuzschlittensystem trägt einen Werkzeugrevolver, der dank des Kreuzschlittensystems in Richtung der Z-Achse und einer hierzu senkrechten X-Achse der Drehmaschine verfahrbar ist und einen Revolverkopf aufweist, der um eine schräg zur Richtung der Z-Achse verlaufende Revolver-schaltachse drehbar ist. Die Gestalt dieses Revolverkopfs entspricht ungefähr der Gestalt zweier mit ihren Grundflächen gegeneinander anliegender Kegelstümpfe mit unterschiedlichen Kegelwinkeln, deren Umfangsflächen jeweils mit einer Reihe von drehwinkelmäßig äquidistanten Werkzeugstationen versehen sind, von denen jede eine Werkzeugaufnahme zum Einspannen eines Werkzeughalters für ein Bearbeitungswerkzeug besitzt. In Richtung der Revolverschaltachse gesehen liegen die Werkzeugstationen der einen Reihe in den Lücken zwischen den Werkzeugstationen der anderen Reihe, die Werkzeugstationen der vom Kreuzschlittensystem abgewandten Reihe besitzen jeweils eine von der Außenfläche des Revolverkopfs gebildete ebene Anlagefläche für einen Werkzeughalter eines Außenbearbeitungswerkzeugs und eine zu dieser Anlagefläche senkrechte Bohrung zur Aufnahme eines Schafts dieses Werkzeughalters, während die dem Kreuzschlittensystem zugewandte Werkzeugstationenreihe schwalbenschwanzförmige Werkzeugaufnahmen zum Einspannen von Werkzeughaltern von Innenbearbeitungswerkzeugen besitzen. Dieser bekannte Werkzeugrevolver verfügt nicht über eine Werkzeug-Antriebsvorrichtung und kann daher nur mit während der Bearbeitung bezüglich des Revolverkopfs stillstehenden Werkzeugen bestückt werden.

Zur Lösung der gestellten Aufgabe wurde die Grundform des Körpers des vorstehend geschilderten bekannten Revolverkopfs aufgegriffen, welcher sich zu beiden Seiten einer senkrecht zur Revolverschaltachse verlaufenden Durchmesserebene des Revolverkopfkörpers verjüngt.

Die Erfindung geht deshalb aus von einem Werkzeugrevolver für eine Werkzeugmaschine, der einen Revolverkopf aufweist, welcher an einer Revolverkopf-Tragvorrichtung des Werkzeugrevolvers um eine Revolverschaltachse drehbar gelagert und mittels einer Revolverkopf-Verriegelungsvorrichtung relativ zur Tragvorrichtung in einer vorgegebenen Anzahl von bezüglich der Schaltachse drehwinkelmäßig äquidistanten Schaltstellungen verriegelbar ist, sich zu beiden Seiten einer senkrecht zur Revolverschaltachse verlaufenden Durchmesserebene des Revolverkopfs verjüngt und auf jeder Seite dieser Durchmesserebene jeweils eine kreisringförmige, zur Schaltachse konzentrische Reihe von drehwinkelmäßig äquidistanten Werkzeugstationen besitzt, deren jede eine einer der Schaltstellungen zugeordnete Werkzeugaufnahme zum Einspannen eines Werkzeughalters für ein Bearbeitungswerkzeug aufweist, wobei

jede Werkzeugstation als Teil einer Schnittstelle zwischen Werkzeughalter und Revolverkopf eine von den Außenflächen des Revolverkopfs gebildete ebene Anlagefläche für den betreffenden Werkzeughalter aufweist, und

die Anlageflächen einer ersten Reihe von Werkzeugstationen eine erste, insbesondere regelmäßige Pyramide und die Anlageflächen der anderen, zweiten Reihe von Werkzeugstationen eine zweite, insbesondere regelmäßige Pyramide definieren, wobei die beiden Pyramiden voneinander wegweisende Spitzen und vorzugsweise gleiche Gestalt aufweisen und die Achse einer jeden Pyramide mit der Revolverschaltachse zusammenfällt, so daß die beiden Pyramiden an der Durchmesserebene des Revolverkopfs, von der die Pyramidenspitzen gleich große Abstände aufweisen, aneinandergrenzen.

Zur Lösung der gestellten Aufgabe wird ein solcher Werkzeugrevolver erfindungsgemäß so gestaltet, daß

(a) mindestens zwei der Werkzeugaufnahmen zum Einspannen eines um eine Werkzeugachse drehantreibbaren Werkzeugs, dessen Werkzeughalter eine Werkzeugantriebswelle zum Eingreifen in die betreffende Werkzeugaufnahme aufweist, ausgebildet sind und eine Werkzeug-Antriebsvorrichtung für die Werkzeugantriebswellen vorgesehen ist;

(b) jede Reihe von Werkzeugstationen mindestens eine Werkzeugaufnahme für ein antreibbares Werkzeug aufweist;

(c) jede der Werkzeugaufnahmen für angetriebene Werkzeuge eine senkrecht zur Anlagefläche der betreffenden Werkzeugstation verlaufende Achse besitzt;

(d) zwei einander benachbarte Werkzeugaufnahmen für antreibbare Werkzeuge zu verschiedenen Werkzeugstationenreihen gehören und bezüglich der Revolverschaltachse drehwinkelmäßig gegeneinander versetzt sind, wobei die Achsen dieser Werkzeugaufnahmen die Durchmesserebene des Revolverkopfs in Punkten durchdringen, welche auf einem zur Schaltachse konzentrischen Kreis liegen;

(e) die Werkzeug-Antriebsvorrichtung mindestens eine senkrecht zur Revolverschaltachse verlaufende Antriebswelle aufweist, welche zum Kuppeln mit bzw. Abkuppeln von einer Werkzeugantriebswelle eines antreibbaren Werkzeugs in ihrer Längsrichtung verschiebbar ist.

Wie sich aus dem Folgenden noch ergeben wird, löst der erfindungsgemäße Werkzeugrevolver nicht nur die gestellte Aufgabe, sondern er bietet an den Schnittstellen zwischen Werkzeughalter und Revolverkopf für jeden Werkzeughalter eine wegen der "Doppelpyramide" verhältnismäßig große plane Anlage- und Abstützfläche und eröffnet darüber hinaus die Möglichkeit, alle Werkzeuge so anzuordnen, daß für jedes sich im Einsatz befindliche Werkzeug die Gefahr minimiert wird, daß sich das Werkzeug unter der Wirkung der Bearbeitungskräfte verbiegt oder sein Werkzeughalter in der Werkzeugaufnahme verdreht wird, und zwar auch dann, wenn die Werkzeughalter zylindrische Schäfte zum Einsetzen in Bohrungen der Werkzeugaufnahmen aufweisen. Hinsichtlich des Durchschaltradiuses ist ein erfindungsgemäßer Werkzeugrevolver ebenso vorteilhaft wie ein Kronenrevolver. Ferner läßt sich der erfindungsgemäße Werkzeugrevolver ohne weiteres so gestalten, daß von den antreibbaren Werkzeugen immer nur das sich gerade in Arbeitsstellung befindliche Werkzeug angetrieben wird, wodurch sich die im Revolverkopf entstehenden Energieverluste minimieren lassen und die Möglichkeit eröffnet wird, alle nicht in Arbeitsstellung befindlichen antreibbaren Werkzeuge gegen ein Verdrehen zu sichern - gewisse antreibbare Werkzeuge werden vorteilhafterweise mit einer ganz bestimmten Drehwinkelposition zum Einsatz gebracht. Schließlich lassen sich bei Verwendung eines erfindungsgemäßen Werkzeugrevolvers Winkelgetriebe in den Werkzeughaltern angetriebener Werkzeuge völlig vermeiden.

Für die Triebverbindung zwischen der Antriebswelle der Werkzeugantriebsvorrichtung und der Werkzeugantriebswelle eines sich in Arbeitsstellung befindenden antreibbaren Werkzeugs sind verschiedene Gestaltungsmöglichkeiten denkbar, bevorzugt wird jedoch eine Ausführungsform, bei der die Antriebswelle der Werkzeug-Antriebsvorrichtung an ihrem von der Revolver-schaltachse abgewandten Endbereich mit einem Zahnrad in Form eines Kegelrads zum Kuppeln mit einem Zahnrad an der Werkzeugantriebswelle eines sich in Arbeitsstellung befindlichen antreibbaren Werkzeugs versehen ist. Bei dem Zahnrad der Werkzeugantriebswelle könnte es sich zwar gleichfalls um ein Kegelrad handeln, die erfindungsgemäße Konstruktion erlaubt es jedoch, an dieser Stelle statt eines Kegelrades ein weniger aufwendiges Stirnrad zu verwenden.

Ein besonderes Merkmal einer bevorzugten Ausführungsform des erfindungsgemäßen Werkzeugrevolvers ist es, daß die Achsen der Werkzeugaufnahmen für angetriebene Werkzeuge derart angeordnet sind, daß beim Drehen des Revolverkopfs um seine Schaltachse am Zahnrad der Antriebswelle der Werkzeug-antriebsvorrichtung nacheinander vorbeilaufende Werkzeugaufnahmeachsen bzw. Werkzeugantriebswellenachsen dieses Zahnrad abwechselnd auf seiner einen und seiner anderen Seite passieren. Die gegenüber der erwähnten Durchmesserebene des Revolverkopfs geneigten Achsen der Werkzeugaufnahmen bzw. der Werkzeugantriebswellen kreuzen sich also radial außerhalb der Antriebswelle der Werkzeug-Antriebsvorrichtung, wenn man sich die Reihen von Werkzeugstationen zu geraden Reihen gestreckt denkt und in Längsrichtung dieser gestreckten Reihen betrachtet. Infolge der Tatsache, daß alle Anlageflächen der Werkzeugstationen bzw. alle Achsen der Werkzeugaufnahmen einen gleich großen Winkel mit der besagten Durchmesserebene des Revolverkopfs bzw. mit der Revolverschaltachse bilden, ergibt sich für die Zahnräder aller Werkzeugantriebswellen auch derselbe Eingriffswinkel am Kegelrad der Antriebswelle der Werkzeugantriebsvorrichtung.

Um die Antriebswelle der Werkzeugantriebsvorrichtung oder, sollte letztere über mehrere Antriebswellen verfügen, alle Antriebswellen der Werkzeugantriebsvorrichtung mittels einer zentralen Eintriebswelle antreiben, aber auch in bezüglich der Revolverschaltachse radialer Richtung verschieben zu können, empfiehlt sich eine Konstruktion, bei der die Antriebswelle der Werkzeugantriebsvorrichtung an ihrem Umfang mit einer Stirnverzahnung zum Antreiben der Antriebswelle mittels einer Kronradverzahnung einer mit der Revolver-schaltachse koaxialen Eintriebswelle versehen ist. Dies bringt auch noch den Vorteil mit sich, daß die Antriebswelle bzw. alle Antriebswellen stets mit der Eintriebswelle gekuppelt sein können und deshalb beim Auskuppeln der angetriebenen Werkzeuge kein Verlust der Drehwinkelkontrolle der Maschinensteuerung bezüglich der Antriebswelle der Werkzeugantriebsvorrichtung eintreten kann - wie bereits erwähnt, ist bei bevorzugten Ausführungsformen der Erfindung vorgesehen, daß die Werkzeugwellen beim Abkuppeln eines antreibbaren Werkzeugs blockiert werden, so daß auch die Drehwinkelpositionen der Werkzeuge selbst stets zu den in der Maschinensteuerung vorliegenden Daten gehören.

Da bei bevorzugten Ausführungsformen des erfindungsgemäßen Werkzeugrevolvers die Werkzeugaufnahmen für antreibbare Werkzeuge so ausgebildet sein sollen, daß sie sich auch mit nicht-antreibbaren Werkzeugen bestücken lassen, werden Ausführungsformen bevorzugt, bei denen jede Werkzeugstationenreihe mehrere Werkzeugaufnahmen für antreibbare Werkzeuge aufweist und insbesondere alle Werkzeugaufnahmen für die Aufnahme antreibbarer Werkzeuge ausgebildet sind. Diesbezüglich sei aber schon hier auf die nachfolgenden Erläuterungen verwiesen, aus denen sich ergibt, daß auch in diesem Fall zwischen den Werkzeugaufnahmen einer jeden Werkzeugstationenreihe noch zusätzliche Werkzeugaufnahmen für nicht-antreibbare Werkzeuge vorgesehen werden können.

Vor allem für den Einsatz auf Werkzeugmaschinen, welche für den Werkzeugrevolver nicht über eine sogenannte B-Achse verfügen, sollten die Anlageflächen der Werkzeugstationen bzw. die Achsen der Werkzeugaufnahmen mit der Durchmesserebene des Revolverkopfs jeweils einen Winkel von 45° bilden, was gleichbedeutend damit ist, daß die Seitenflächen einer jeden Pyramide mit der Revolverschaltachse jeweils einen Winkel von 45° bilden, denn dann lassen sich auch bei einer Gegenspindelmaschine Werkzeuge eines Werkzeugrevolvers an jeder der beiden Werkstückspindeln zum Einsatz bringen. Ist der Werkzeugrevolver jedoch um eine B-Achse schwenkbar, d. h. um eine zur Z- und zur X-Achse senkrecht verlaufende Achse, ist ein Winkel von 45° nicht zwingend erforderlich.

Aus den vorstehenden Erläuterungen folgt, daß die Erfindung auch eine Drehmaschine mit einer B-Achse für den Werkzeugrevolver und/oder mit zwei einander gegenüberliegenden, koaxialen Werkstückspindeln, d. h. eine sogenannte Gegenspindelmaschine, mit einem oder mehreren erfindungsgemäßen Werkzeugrevolvern betrifft.

Im folgenden soll die Erfindung anhand besonders vorteilhafter, in der Zeichnung dargestellter Ausführungsformen noch näher erläutert werden, wobei sich zusätzliche Merkmale und Vorteile der Erfindung aus den Zeichnungen und deren Beschreibung ergeben; in der Zeichnung zeigen:

| | |
|---|---|
| Fig. 1 | eine schematische und stark vereinfachte Draufsicht auf den Arbeitsraum einer als Gegenspindelmaschine gestalteten Drehmaschine mit einem herkömmlichen Sternrevolver; |
| Fig. 2 | eine der Fig. 1 entsprechende Darstellung, jedoch mit herkömmlichen Scheibenrevolvern; |
| Fig. 3 | eine schematische und wiederum stark vereinfachte Ansicht des Arbeitsraums einer Drehmaschine mit einer Werkstückspindel und einem herkömmlichen Kronenrevolver, welcher jedoch in zwei Positionen gezeichnet wurde, wobei sich in der einen Position ein Innenbearbeitungswerkzeug in Form eines Bohrers in Arbeitsstellung befindet, während sich in der anderen Position ein Außenbearbeitungswerkzeug in Form eines Drehmeißels in Arbeitsstellung befindet; |
| Fig. 4A | eine schematische Seitenansicht eines erfindungsgemäßen Werkzeugrevolvers mit einem als Säule ausgebildeten Werkzeugrevolverträger zur Realisierung einer B- und einer Y-Achse für den Werkzeugrevolver; |
| Fig. 4B | eine Stirnansicht (gemäß Fig. 4A von links gesehen) des erfindungsgemäßen Werkzeugrevolvers, wobei jedoch im Gegensatz zu Fig. 4A alle Werkzeugaufnahmen für antreibbare Werkzeuge mit derartigen Werkzeugen bestückt sind; |
| Fig. 5A, 5B und 5C | der Fig. 1 entsprechende Darstellungen einer Gegenspindelmaschine, welche jedoch zwei erfindungsgemäße Werkzeugrevolver aufweist, die in den Figuren 5A und 5B mit nicht-antreibbaren Werkzeugen in Form von Außen- und Innenbearbeitungswerkzeugen und in Fig. 5C mit Bohrern zum Längs- und Querbohren bestückt sind, wobei die Figuren 5A und 5B die beiden Werkzeugrevolver in unterschiedlichen Positionen zeigen, um zu verdeutlichen, daß jeder Werkzeugrevolver an jeder Werkstückspindel zum Einsatz gebracht werden kann; |
| Fig. 6 | einen axialen Schnitt durch eine bevorzugte Ausführungsform des erfindungsgemäßen Werkzeugrevolvers, und zwar einen Schnitt nach der Linie 6-6 in Fig. 4B, wobei allerdings die in Fig. 6 unten gezeigte Werkzeugaufnahme samt Werkzeugantriebswelle des in diese Aufnahme eingesetzten antreibbaren Werkzeugs in einer anderen, der Linie 6'-6' aus Fig. 4B entsprechenden Schnittebene gezeichnet wurde; |
| Fig. 7 | einen Schnitt nach der Linie 7-7 in Fig. 6, wobei jedoch die Werkzeugantriebswellen weggelassen wurden; |

| Fig. 8 | den oberen linken Teil der Fig. 6 in größerem Maßstab, wobei jedoch die Werkzeugantriebsvorrichtung von der in Fig. 6 oben dargestellten Werkzeugantriebswelle abgekuppelt ist; |
|---|---|
| Fig. 9A und 9B | Schnitte gemäß der in Fig. 6 angedeuteten Schnittlinie 9, jedoch in größerem Maßstab, wobei in Fig. 9A die in Fig. 6 oben dargestellte Werkzeugantriebswelle abgekuppelt und verriegelt ist, während die Fig. 9B denjenigen Zustand zeigt, in dem diese Werkzeugantriebswelle mit der Werkzeugantriebsvorrichtung gekuppelt ist und angetrieben werden kann; |
| Fig. 10 | eine Draufsicht auf eine Gegenspindelmaschine mit zwei erfindungsgemäßen Werkzeugrevolvern gemäß Fig. 4A; |
| Fig. 11 | eine Ansicht der gemäß Fig. 10 linken Werkstückspindel und der beiden Werkzeugrevolver samt ihren Werkzeugrevolverträgern und Kreuzschlittensystemen, gemäß Fig. 10 von rechts gesehen, und |
| Fig. 12 | eine der Fig. 10 entsprechende Darstellung, wobei jedoch nur der gemäß Fig. 10 untere Werkzeugrevolver gezeichnet wurde, und zwar in zwei verschiedenen Stellungen, um zu verdeutlichen, daß mit allen Werkzeugen dieses Werkzeugrevolvers sowohl von der einen, als auch von der anderen Werkstückspindel gehaltene Werkstücke bearbeitet werden können. |

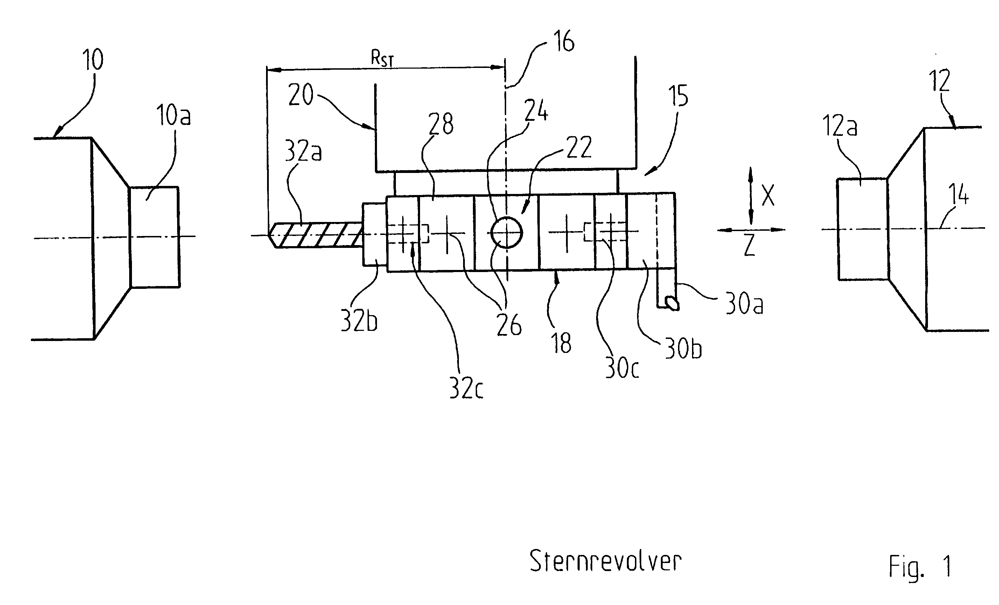

Bei den in Fig. 1 dargestellten Elementen einer herkömmlichen, als Gegenspindelmaschine gestalteten und mit einem bekannten Sternrevolver ausgestatteten Drehmaschine handelt es sich um eine Werkstückspindel 10 zum Halten eines zu bearbeitenden Werkstücks 10a, eine Werkstückspindel 12 zum Halten eines zu bearbeitenden Werkstücks 12a, welche beide um eine den zwei Spindeln gemeinsame Spindelachse 14 drehbar gelagert sind, sowie um einen Werkzeugrevolver 15 mit einem um eine Revolverschaltachse 16 drehbaren Revolverkopf 18 und einem als Revolverkopf-Tragvorrichtung fungierenden Revolvergehäuse 20, an dem der Revolverkopf 18 gelagert ist. Der Revolverkopf 18 des als Sternrevolver ausgebildeten Werkzeugrevolvers 15 hat zwölf Werkzeugstationen mit jeweils einer Werkzeugaufnahme 22, die mit einer Aufnahmebohrung 24 (die Fig. 1 zeigt nur eine dieser Aufnahmebohrungen) mit bezüglich der Schaltachse 16 radial verlaufender Achse 26 versehen und der eine von der Umfangsfläche des Revolverkopfs 18 gebildete ebene, senkrecht zur Achse 26 verlaufende Anlagefläche 28 zugeordnet ist. Die Werkzeugaufnahmen 22 lassen sich mit Bearbeitungswerkzeugen bestücken, deren jedes aus dem eigentlichen Werkzeug und einem Werkzeughalter besteht; die Fig. 1 zeigt nur zwei solche Bearbeitungswerkzeuge, nämlich ein als Drehmeißel gestaltetes Außenbearbeitungswerkzeug 30a und ein als Bohrer gestaltetes Innenbearbeitungswerkzeug 32a. Das Außenbearbeitungswerkzeug 30a wird von einem Werkzeughalter 30b gehalten, das Innenbearbeitungswerkzeug 32a von einem Werkzeughalter 32b, und jeder dieser Werkzeughalter hat einen zylindrischen Werkzeughalterschaft 30c bzw. 32c, der in die Aufnahmebohrung 24 der betreffenden Werkzeugaufnahme 22 eingesetzt und in dieser Aufnahmebohrung durch nicht dargestellte Mittel eingespannt ist.

In Fig. 1 sind auch die Richtungen der Z- und der X-Achse dieser Drehmaschine durch die Doppelpfeile Z und X angegeben, die Z-Achse verläuft parallel zur Spindelachse 14, die X-Achse senkrecht zur Z-Achse, und zwar in einer solchen Richtung, daß sich durch Verschieben des Werkzeugrevolvers 15 in Richtung der X-Achse der Durchmesser des Werkstücks lOa bzw. 12a einstellen läßt, welcher sich durch Bearbeiten des Außenumfangs dieses Werkstücks mit Hilfe des Außenbearbeitungswerkzeugs 30a ergibt.

Nicht dargestellt sind die Spindelstöcke oder Spindelkästen, in denen die Werkstückspindeln 10 und 12 gelagert sind, und auch nicht das den Werkzeugrevolver 15 tragende Kreuzschlittensystem, mit dessen Hilfe sich der Werkzeugrevolver 15 in Richtung der Z- und der X-Achse relativ zu den beiden Werkstückspindeln 10 und 12 verschieben läßt.

Dasjenige Werkzeug, dessen Spitze den größten radialen Abstand von der Revolverschaltachse 16 besitzt, im Falle der Fig. 1 also das Innenbearbeitungswerkzeug 32a, bestimmt den sogenannten Durchschaltradius $R_{ST}$ des Werkzeugrevolvers 15, und bei einem Sternrevolver ist dieser Durchschaltradius gleich der halben, in Richtung der Z-Achse zwischen den beiden Werkstückspindeln erforderlichen Durchschaltlänge, die benötigt wird, um den mit Bearbeitungswerkzeugen bestückten Revolverkopf 18 um 360° drehen zu können, ohne daß eines seiner Werkzeuge mit einer der Werkstückspindeln oder mit einem der Werkstücke kollidiert.

Wie aus Fig. 1 gut erkennbar wird, haben z. B. beim Arbeiten des Außenbearbeitungswerkzeugs 30a am Umfang des Werkstücks 12a die auf das Außenbearbeitungswerkzeug 30a einwirkenden Bearbeitungskräfte die Tendenz, den Werkzeughalter 30b um die Achse seines Schafts 30c, d. h. um die Achse 26 der den Werkzeughalter 30b haltenden Werkzeugaufnahme 22 zu verdrehen.

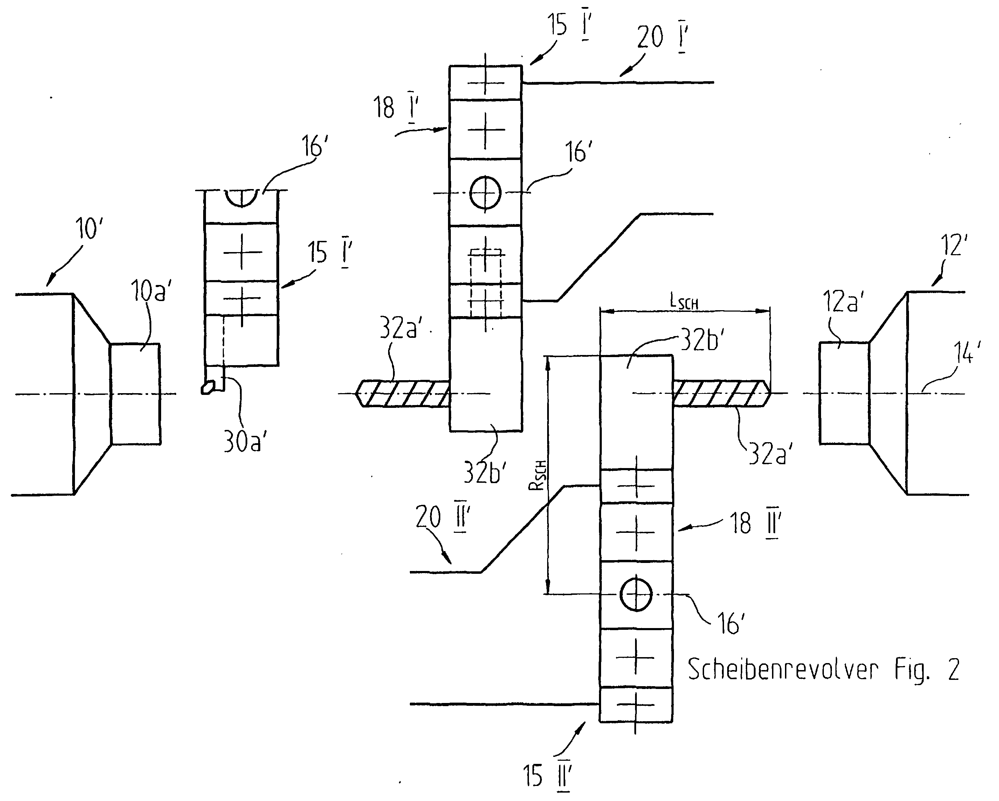

In Fig. 2, welche eine Gegenspindelmaschine mit herkömmlichem Scheibenrevolver in der Fig. 1 entsprechender Weise zeigt, wurden dieselben Bezugszeichen wie in Fig. 1 verwendet, jedoch unter Hinzufügung eines Strichs, und da sich die in den Figuren 1 und 2 gezeigten Drehmaschinen nur in der Art bzw. der Anordnung des Revolvers und infolgedessen in der Ausbildung der Werkzeughalter unterscheiden, kann die Erläuterung der Fig. 2 kurzgehalten werden.

Die in Fig. 2 gezeigte Gegenspindelmaschine verfügt über zwei als Scheibenrevolver gestaltete Werkzeugrevolver 15I' und 15II', von denen der Werkzeugrevolver 15I' der Werkstückspindel 10' und der Werkzeugrevolver 15II' der Werkstückspindel 12' zugeordnet ist, jedenfalls dann, wenn diese Drehmaschine nicht über B-Achsen für die beiden Werkzeugrevolver verfügt. Die in Fig. 2 vollständig gezeigten Revolverköpfe 18I' und 18II' tragen jeweils ein als Bohrer ausgebildetes Innenbearbeitungswerkzeug 32a' (die anderen Werkzeuge wurden nicht dargestellt), jedoch wurde die eine Hälfte des Revolverkopfs 18I' auch noch zusammen mit einem Außenbearbeitungswerkzeug 30a' dargestellt. Wie der für den Werkzeugrevolver 15II' eingezeichnete Durchschaltradius $R_{sch}$ erkennen läßt, ist dieser für einen Scheibenrevolver wesentlich kleiner als für einen Sternrevolver, da beim Scheibenrevolver die Innenbearbeitungswerkzeuge vom Revolverkopf nicht in bezüglich der Revolverschaltachse radialer Richtung abstehen, jedoch müssen bei einem Scheibenrevolver die Werkzeughalter 32b' für angetriebene Innenbearbeitungswerkzeuge ein aufwendiges Winkelgetriebe enthalten, da im Inneren des Revolverkopfs befindliche Antriebswellen zum Antreiben von Bohrern und dergleichen in bezüglich der Revolverschaltachse radialer Richtung verlaufen. Wie der Durchschaltradius ist auch die Durchschaltlänge $L_{SCH}$, die in Fig. 2 für den Werkzeugrevolver 18II' eingezeichnet wurde, bei einem Scheibenrevolver wesentlich kleiner als bei einem Sternrevolver.

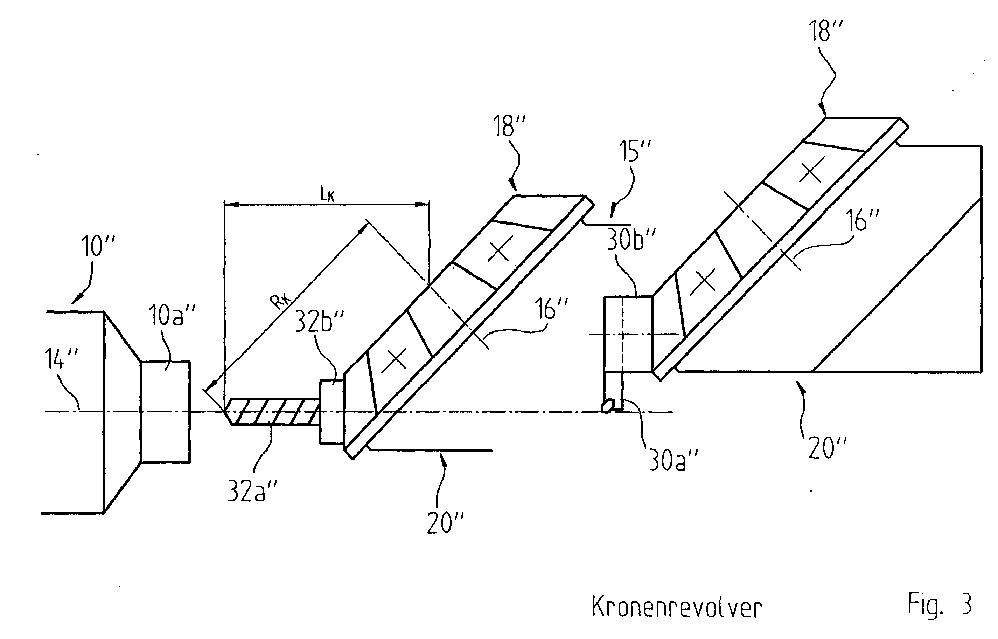

In Fig. 3, welche eine Drehmaschine mit einem herkömmlichen Kronenrevolver in der Fig. 1 analoger Weise darstellt, wurden dieselben Bezugszeichen wie in Fig. 1 verwendet, jedoch unter Hinzufügung zweier Striche, so daß sich auch die Beschreibung der Fig. 3 kurzfassen läßt.

Die Fig. 3 zeigt ein und denselben, als herkömmlichen Kronenrevolver ausgebildeten Werkzeugrevolver 15" in zwei verschiedenen Positionen, wobei sich in der einen Position ein Innenbearbeitungswerkzeug 32a" und in der anderen Position ein Außenbearbeitungswerkzeug 30a" in Arbeitsstellung befindet.

Wie die Fig. 3 erkennen läßt, ergeben sich bei einem Kronenrevolver ein besonders kleiner Durchschaltradius $R_K$ und eine besonders kleine Durchschaltlänge $L_K$, die Werkzeughalter 32b" für Innenbearbeitungswerkzeuge 32a" haben infolge ihrer schrägen Anordnung bezüglich des Revolverkopfs 18" eine stabile, da größere ebene Anlagefläche, jedoch neigen Außenbearbeitungswerkzeuge 30a", ähnlich wie bei einem in Fig. 1 gezeigten Sternrevolver, unter der Wirkung der Bearbeitungskräfte dazu, um die Achse ihrer Werkzeugaufnahme verdreht zu werden. Außerdem benötigen angetriebene Werkzeuge, welche, anders als das gezeichnete Innenbearbeitungswerkzeug 32a", an einer Umfangsfläche eines Werkstücks zum Einsatz gebracht werden sollen, ein Winkelgetriebe in ihrem Werkzeughalter. Schließlich lassen sich die Werkzeuge eines Kronenrevolvers immer nur an einer Werkstückspindel zum Einsatz bringen, es sei denn, die Drehmaschine verfügt über eine B-Achse für den Kronenrevolver.

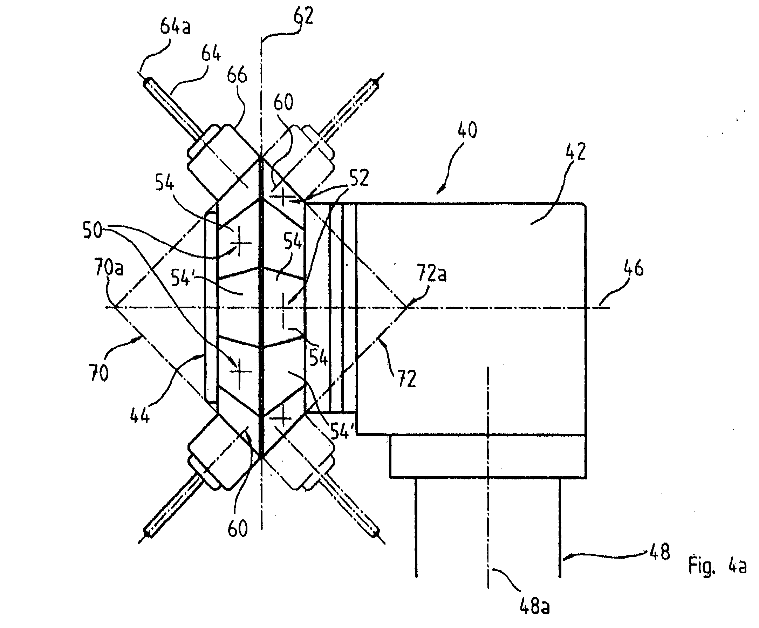

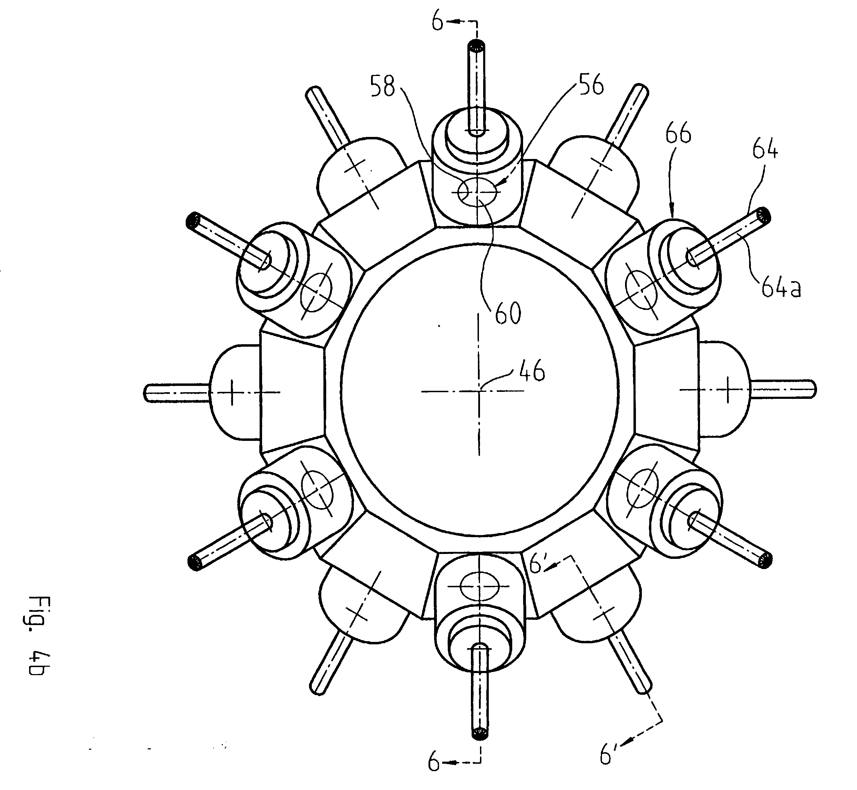

In den Figuren 4A und 4B ist nun ein erfindungsgemäßer Werkzeugrevolver in einer Seitenansicht bzw. einer Stirnansicht dargestellt. Wie die Fig. 4A erkennen läßt, verfügt der als Ganzes mit 40 bezeichnete Werkzeugrevolver über ein als Revolverkopf-Tragvorrichtung fungierendes Revolvergehäuse 42 und einen Revolverkopf 44, der am bzw. im Revolvergehäuse 42 um eine Revolverschaltachse 46 drehbar gelagert ist, mittels einer nicht dargestellten Revolverschaltvorrichtung um die Schaltachse 46 gedreht und durch eine gleichfalls nicht gezeichnete Verriegelungsvorrichtung am Revolvergehäuse 42 festgelegt werden kann; da derartige Schaltvorrichtungen grundsätzlich bekannt und jedem Fachmann vertraut sind, kann diesbezüglich auf den Stand der Technik verwiesen werden, während die Verriegelungsvorrichtung später noch beschrieben werden wird.

Bei der in Fig. 4A gezeigten Ausführungsform wird das Revolvergehäuse 42 von einer als Werkzeugrevolverträger dienenden Säule 48 getragen, deren Achse mit 48a bezeichnet wurde. Diese Säule soll an einem Kreuzschlittensystem der Werkzeugmaschine angeordnet sein, welches es erlaubt, die Säule 48 in Richtung der Z- und in Richtung der X-Achse zu verschieben; außerdem soll die Säule 48 an dem sie tragenden Oberschlitten dieses Kreuzschlittensystems so angebracht sein, daß sie sich gegenüber diesem Oberschlitten in Richtung der Säulenachse 48a verschieben und um diese Achse drehen läßt. Da die Säulenachse 48a senkrecht zur Richtung der Z-Achse und senkrecht zur Richtung der X-Achse verlaufen soll, definiert die Säulenachse 48a also die Richtung einer sogenannten Y-Achse der Werkzeugmaschine, in der sich der Werkzeugrevolver 40 verschieben läßt, aber auch die Richtung einer sogenannten B-Achse der Werkzeugmaschine, um die sich der Werkzeugrevolver 40 schwenken läßt.

Der Revolverkopf 44 hat eine erste, vordere Reihe von sechs Werkzeugstationen 50 und eine zweite, hintere Reihe von sechs Werkzeugstationen 52, welche ebenso ausgebildet sein sollen wie die Werkzeugstationen des in Fig. 1 dargestellten Sternrevolvers und bezüglich der Revolverschaltachse 46 ebenso angeordnet sein sollen wie die Werkzeugstationen des in Fig. 3 dargestellten Kronenrevolvers. Jede Werkzeugstation verfügt also über eine ebene Anlagefläche 54 und eine in Fig. 4B angedeutete Werkzeugaufnahme 56 mit einer Aufnahmebohrung 58 (siehe gleichfalls Fig. 4B), wobei die Achsen dieser Aufnahmebohrungen mit 60 bezeichnet wurden. Jede dieser Achsen 60 verläuft senkrecht zur zugeordneten Anlagefläche 54 und bildet bei bevorzugten Ausführungsformen des erfindungsgemäßen Werkzeugrevolvers mit einer Mittelebene 62 des Revolverkopfs 44 einen Winkel von 45°, so daß bei einer solchen Ausführungsform auch jede der Anlageflächen 54 mit der Mittelebene 62 einen Winkel von 45° bildet. Ferner durchdringen alle Achsen 60 die Mittelebene an Stellen, welche auf einem zur Schaltachse 46 konzentrischen Kreis liegen.

Bei der bevorzugten Ausführungsform sollen alle Werkzeugstationen 50 und alle Werkzeugstationen 52 für angetriebene Werkzeuge vorgesehen und infolgedessen entsprechend ausgebildet sein; die Werkzeuge selbst wurden mit 64 bezeichnet, ihre Achsen mit 64a und ihre Werkzeughalter mit 66. Wie bei der in Fig. 1 dargestellten Konstruktion soll jeder dieser Werkzeughalter einen in den Figuren 4A und 4B nicht dargestellten, zylindrischen Werkzeughalterschaft aufweisen, welcher in die Aufnahmebohrung 58 der betreffenden Werkzeugaufnahme 56 eingreift, während eine vom eigentlichen Werkzeug 64 angewandte hintere und ebene Stirnfläche des Werkzeughalters 66 gegen die Anlagefläche 54 der betreffenden Werkzeugstation 50 bzw. 52 anliegt.

Wie besonders deutlich die Fig. 4B erkennen läßt, sind - in Richtung der Revolverschaltachse 46 gesehen - sowohl die Werkzeugstationen 50 der einen Reihe, als auch die Werkzeugstationen 52 der anderen Reihe in gleichen Winkelabständen voneinander angeordnet, und die Werkzeugstationen 50 der einen Reihe sind gegenüber den Werkzeugstationen 52 der anderen Reihe um die Hälfte dieses Winkelabstands versetzt. Vorsorglich sei auch noch darauf hingewiesen, daß bei bevorzugten Ausführungsformen des erfindungsgemäßen Werkzeugrevolvers auch die Werkzeugachsen 64a aller Werkzeuge 64 mit der Mittelebene 62 des Revolverkopfs 44 einen Winkel von 45° bilden, wobei jedoch die Werkzeuge der einen Werkzeugstationenreihe von der einen und die Werkzeuge der anderen Werkzeugstationenreihe von der anderen Seite der Mittelebene 62 wegweisen.

Bei bevorzugten Ausführungsformen definieren die Anlageflächen 54 der Werkzeugstationen 50 der einen Reihe eine erste regelmäßige Pyramide 70 und die Anlageflächen 54 der Werkzeugstationen 52 der anderen Reihe eine zweite regelmäßige Pyramide 72. Die Pyramiden 70 und 72 sind in Fig. 4A strichpunktiert angedeutet, sie haben die gleiche Gestalt, ihre Grundflächen fallen mit der Mittelebene 62 und ihre Achsen mit der Revolverschaltachse 46 zusammen, und schließlich haben ihre Spitzen 70a bzw. 72a gleich große Abstände von der Mittelebene 62.

Es sei noch erwähnt, daß bei der zeichnerisch dargestellten, bevorzugten Ausführungsform die zwischen den Anlageflächen 54 liegenden Umfangsflächenbereiche 54' des Revolverkopfs 44 zwar gleichfalls eben sind und gleichfalls regelmäßige Pyramiden definieren, daß dies aber nicht der Fall sein muß. Bei der zeichnerisch dargestellten Ausführungsform könnten die ebenen Flächen 54' jedoch zu weiteren Werkzeugstationen für nicht-angetriebene Werkzeuge gehören, welche dann zwischen den aufeinanderfolgenden Werkzeugstationen 50 bzw. 52 der beiden Werkzeugstationenreihen liegen. In diesem Fall würde der in den Figuren 4A und 4B dargestellte Werkzeugrevolver insgesamt 24 Werkzeugstationen besitzen, nämlich zwölf für angetriebene Werkzeuge und zwölf für nicht-angetriebene Werkzeuge.

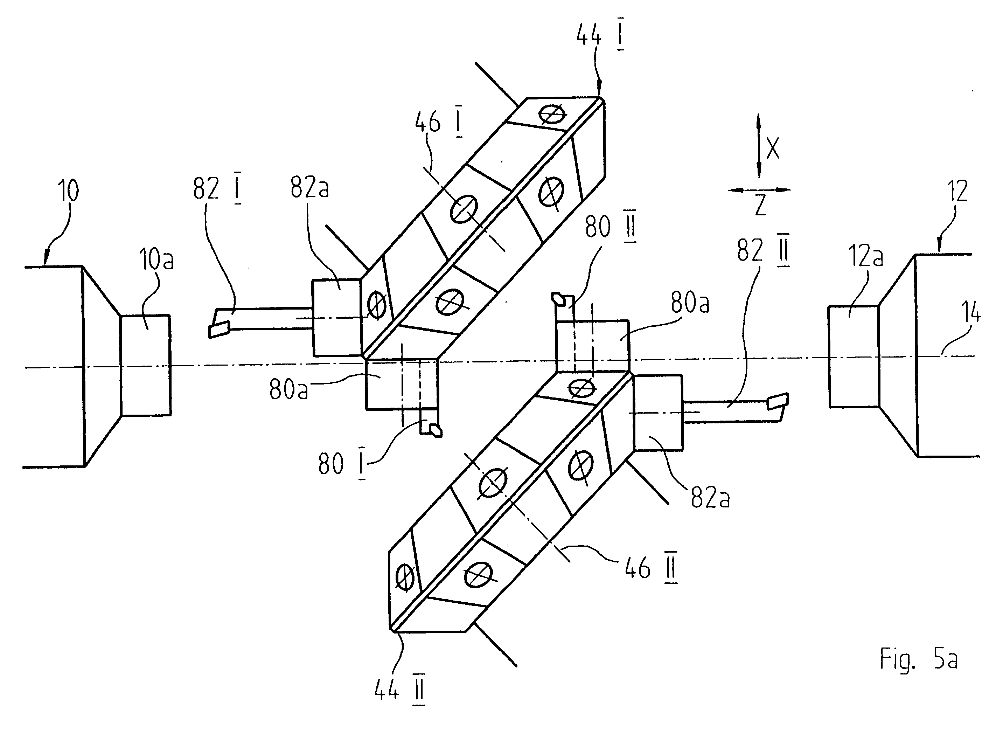

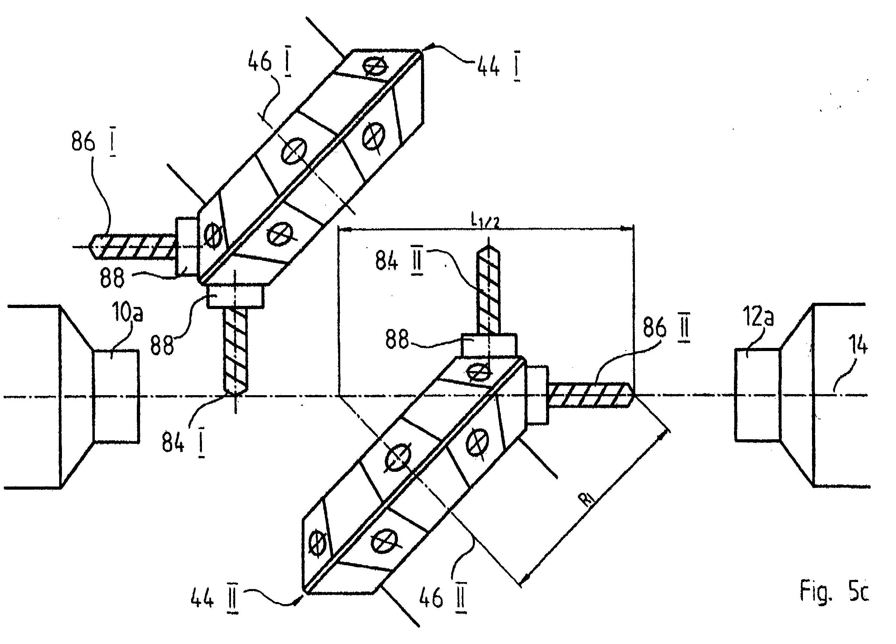

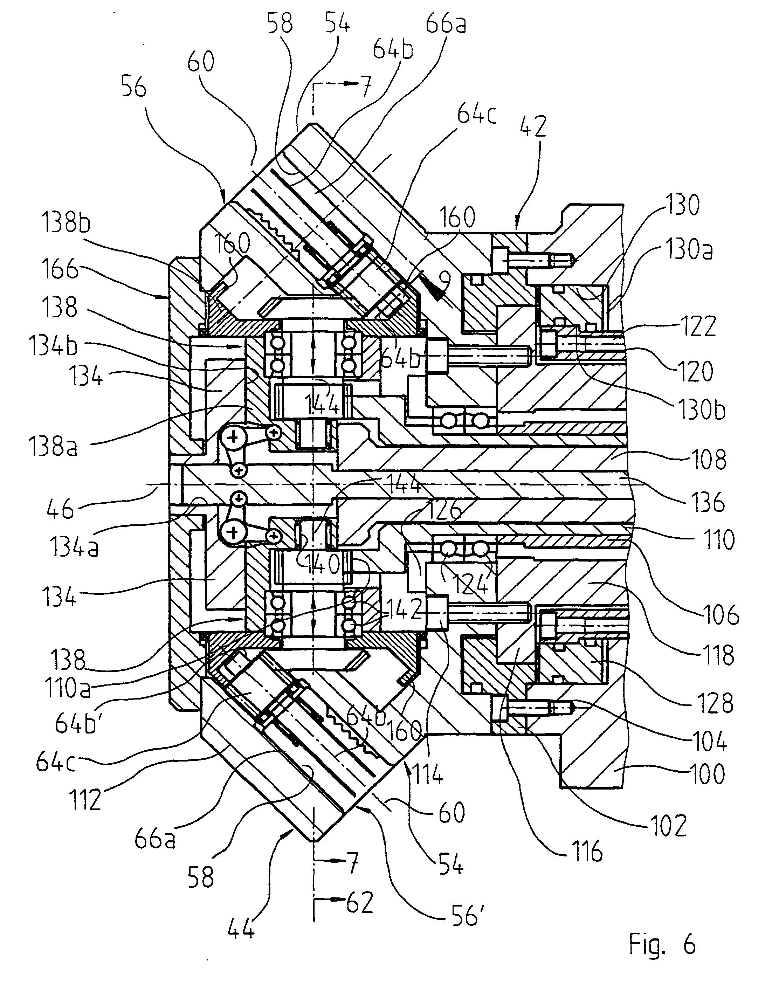

Ehe nun anhand der Figuren 6 bis 8 sowie 9A und 9B der innere Aufbau des Revolverkopfs 44 und der Antrieb für die Werkzeuge 64 beschrieben wird, soll zunächst anhand der Figuren 5A bis 5C erläutert werden, in welch vielfältiger Weise der erfindungsgemäße Werkzeugrevolver eingesetzt werden kann. Aus den Figuren 5A bis 5C ergibt sich auch, daß sich jede der Werkzeugstationen 50 und 52 statt mit einem angetriebenen Werkzeug auch mit einem nicht-angetriebenen Werkzeug bestücken läßt.

Die Figuren 5A bis 5C zeigen wieder eine als Gegenspindelmaschine ausgebildete Drehmaschine mit zwei Werkstückspindeln 10 und 12, deren jede ein zu bearbeitendes Werkstück lOa bzw. 12a hält sowie um eine beiden Werkstückspindeln gemeinsame Spindelachse 14 drehbar gelagert ist. Die Drehmaschine nach den Figuren 5A bis 5C ist jedoch mit zwei erfindungsgemäßen Werkzeugrevolvern versehen, deren Revolverköpfe mit 44I und 44II bezeichnet wurden. Der Revolverkopf 441 ist um eine Revolverschaltachse 46I drehbar, der Revolverkopf 44II um eine Revolverschaltachse 46II. Bei Verwendung von Revolverköpfen der bevorzugten Ausführungsform bilden diese beiden Revolverschaltachsen mit der Richtung der Z-Achse einen Winkel von 45° und liegen in der X/Z-Ebene - die X/Z-Ebene wird von der Richtung der X-Achse und der Spindelachse 14 definiert.

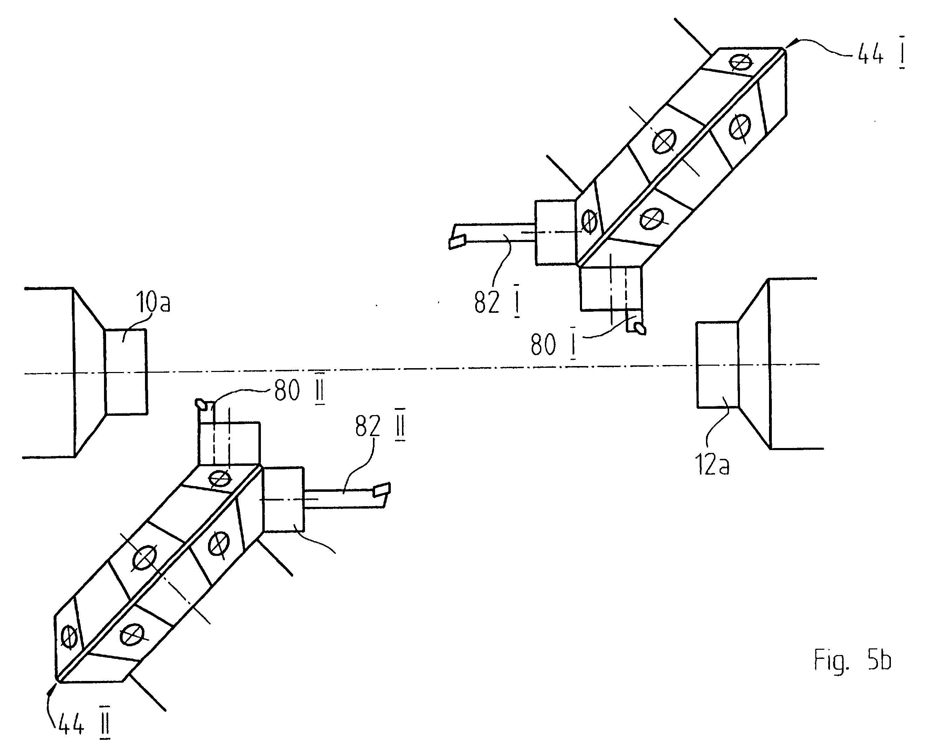

Bei der in den Figuren 5A und 5B dargestellten Werkzeugbestückung ist der Revolverkopf 44I mit einem Außenbearbeitungswerkzeug 80I in Form eines Drehmeißels und mit einem Innenbearbeitungswerkzeug 82I in Form einer Bohrstange bestückt, und gleiches gilt für den Revolverkopf 44II, wobei das Außenbearbeitungswerkzeug mit 80II und das Innenbearbeitungswerkzeug mit 82II bezeichnet wurden. Die Werkzeughalter für die Außenbearbeitungswerkzeuge wurden mit 80a bezeichnet, die Werkzeughalter für die Innenbearbeitungswerkzeuge mit 82a.

Bei der in Fig. 5C dargestellten Werkzeugbestückung trägt der Revolverkopf 44I zwei angetriebene Bearbeitungswerkzeuge 84I und 86I, welche beide als Bohrer dargestellt wurden, und gleiches gilt für den Revolverkopf 44II, wobei die beiden Bearbeitungswerkzeuge mit 84II und 86II bezeichnet wurden. Bei der in Fig. 5C dargestellten Werkzeugbestückung können die Werkzeughalter 88 für alle Bearbeitungswerkzeuge identisch ausgebildet sein.

In der Fig. 5C wurden auch noch der Durchschaltradius $R_I$ und die halbe Durchschaltlänge $\frac{L_I}{2}$ für den Revol-verkopf 44II angegeben.

Aus den Figuren 5A bis 5C ergibt sich, daß sich mit den beiden Werkzeugrevolvern die folgenden Bearbeitungsvorgänge durchführen lassen, und zwar auch dann, wenn keiner der beiden Werkzeugrevolver über eine B-Achse verfügt:

Wie sich aus Fig. 5A ergibt, kann das Werkstück lOa mit den Werkzeugen des Revolverkopfs 44I sowohl einer Außen- als auch einer Innenbearbeitung unterzogen werden, und entsprechendes gilt für das Werkstück 12a in Verbindung mit den Werkzeugen des Revolverkopfs 44II. Da aber jeder der beiden Werkzeugrevolver von einem Kreuzschlittensystem getragen werden soll und sich infolgedessen sowohl in Richtung der Z-Achse, als auch in Richtung der X-Achse verschieben läßt, kann, wie sich aus Fig. 5B ergibt, das Werkstück 10a auch mit Werkzeugen des Revolverkopfs 44II einer Außenbearbeitung unterzogen werden, während mit Werkzeugen des Revolverkopfs 44I am Werkstück 12a Außenbearbeitungsvorgänge durchgeführt werden können.

Bezüglich der Fig. 5C muß man sich vor Augen halten, daß an die Stelle von Bohrern als Innenbearbeitungswerkzeuge natürlich auch andere Innenbearbeitungswerkzeuge treten können, z. B. Drehwerkzeuge in Form sogenannter Bohrstangen oder Fräser. Die Fig. 5C läßt erkennen, daß sich das Werkstück 10a mit dem Werkzeug 84I von seinem Umfang her bearbeiten läßt, um z. B. eine Querbohrung zu erzeugen, während sich das Werkstück 10a mit dem Innenbearbeitungswerkzeug 86I von seiner gemäß Fig. 5C rechten Stirnseite her bearbeiten läßt, um z. B. eine zur Spindelachse 14 parallele Längsbohrung zu erzeugen. Entsprechendes gilt für das Werkstück 12a, an dessen Umfang sich das Werkzeug 84II zum Einsatz bringen läßt, während das Innenbearbeitungswerkzeug 86II an der gemäß Fig. 5C linken Stirnseite des Werkstücks 12a eingesetzt werden kann. Für Werkzeuge wie die Werkzeuge 84I und 84II gilt analog zur Fig. 5B, daß sich Werkzeuge des Revolverkopfs 44I auch am Werkstück 12a und Werkzeuge des Revolverkopfs 44II auch am Werkstück 10a zum Einsatz bringen lassen, selbst wenn keiner der beiden Werkzeugrevolver über eine B-Achse verfügt.

Anhand der Fig. 6 soll nun der innere Aufbau einer besonders vorteilhaften Ausführungsform des erfindungsgemäßen Werkzeugrevolvers erläutert werden, wobei hinsichtlich der anhand der Figuren 4A und 4B beschriebenen Merkmale der äußeren Gestaltung des Werkzeugrevolvers auf die obigen Ausführungen verwiesen werden kann.

Die Fig. 6 zeigt vom Revolvergehäuse 42 einen Gehäusekörper 100, an dessen vorderer, dem Revolverkopf 44 zugekehrten Stirnseite ein Lagerring 102 mittels Schrauben 104 befestigt ist. Mit dem Revolvergehäuse 42 in nicht dargestellter Weise fest verbunden ist ein inneres Lagerrohr 108, welches ebenso wie der Lagerring 102 konzentrisch zur Revolverschaltachse 46 ausgebildet und angeordnet ist. Das innere Lagerrohr 108 wird von einer mit der Revolverschaltachse 46 koaxialen Eintriebswelle 110 einer Werkzeug-Antriebsvorrichtung umfaßt, die an ihrer vorderen, gemäß Fig. 6 linken Stirnseite eine Kronradverzahnung 110a aufweist und mit einer Haltehülse 106 fest verbunden ist.

Der Revolverkopf 44 hat einen Revolverkopfkörper 112, an dem mittels Schrauben 114 ein zur Revolverschaltachse 46 konzentrischer Lagerflansch 116 befestigt ist. Der Drehung des Revolverkopfs 44 um die Revolverschaltachse 46 dient eine mit letzterer koaxiale und am Lagerflansch 116 befestigte Antriebshülse 118, welche mit einer nicht dargestellten, als Drehantrieb gestalteten Revolverschaltvorrichtung in Antriebsverbindung steht und von einem Haltering 120 umgeben wird, welcher mittels Schrauben 122 an einem nicht dargestellten Bereich des Gehäusekörpers 100 befestigt sein soll. Der am Gehäusekörper 100 befestigte Lagerring 102 dient also sowohl der Lagerung, als auch der axialen Sicherung des um die Revolverschaltachse 46 drehbaren Revolverkopfkörpers 112.

Zwischen dem Revolverkopfkörper 112 und der Eintriebswelle 110 sind zwei Kugellager 124 angeordnet, welche in axialer Richtung einerseits durch die Haltehülse 106 sowie eine Schulter der Eintriebswelle 110 und andererseits durch den Lagerflansch 116 sowie einen am Revolverkopfkörper 112 in nicht näher dargestellter Weise befestigten Haltering 126 gesichert werden.

Eine Revolverkopf-Verriegelungsvorrichtung dient dazu, den Revolverkopf 44 in durch die Maschinensteuerung vorgegebenen Drehwinkelpositionen am Revolvergehäuse 42 festzulegen, so daß sich der Revolverkopf auch unter der Wirkung von Bearbeitungskräften nicht um die Schaltachse 46 verdrehen kann.

Bestandteile der Revolverkopf-Verriegelungsvorrichtung sind der Lagerflansch 116, der Lagerring 102 und ein Ringkolben 128, welcher sich in einer ringförmigen Zylinderkammer 130 in Richtung der Schaltachse 46 hin- und herschieben läßt. Die Fig. 6 läßt rechts vom Ringkolben 128 einen Zylinderraum 130a und zwischen Schultern des Ringkolbens 128 und des Halterings 120 einen kleinen, gleichfalls ringförmigen Zylinderraum 130b erkennen, welche sich über nicht gezeichnete Hydraulikölbohrungen abwechselnd mit Drucköl beaufschlagen lassen, um so den Ringkolben 128 hin- und herschieben zu können. Was in Fig. 6 aus Gründen ihres Maßstabs nicht dargestellt werden konnte, sind drei zusammenwirkende Planverzahnungen, von denen die eine an der gemäß Fig. 6 linken Stirnseite des Ringkolbens 128 angeordnet ist; der Planverzahnung des Ringkolbens 128 liegen zwei Planverzahnungen an der gemäß Fig. 6 rechten Stirnseite des Lagerrings 102 und an der rechten Stirnseite des Lagerflanschs 116 gegenüber, die dieselbe Teilung haben wie die Planverzahnung des Ringkolbens 128. Da die Zähne aller dieser drei Planverzahnungen bezüglich der Revolverschaltachse 46 in radialer Richtung verlaufen, kann die Planverzahnung des Ringkolbens 128 gleichzeitig in die beiden Planverzahnungen des Lagerflanschs 116 und des Lagerrings 102 eingreifen und so verhindern, daß sich der Lagerflansch 116 und damit der Revolverkopfkörper 112 gegenüber dem Lagerring 102 und damit gegenüber dem Revolvergehäuse 42 verdrehen läßt. Wird der Ringkolben 128 gemäß Fig. 6 nach rechts verschoben, gibt seine Planverzahnung jedoch den Lagerflansch 116 frei, so daß sich der Revolverkopfkörper 112 um die Revolverschaltachse 46 drehen läßt. Derartige dreiteilige HIRTH-Verzahnungen zum Verriegeln und Freigeben von Revolverköpfen sind aus dem Stand der Technik bekannt.

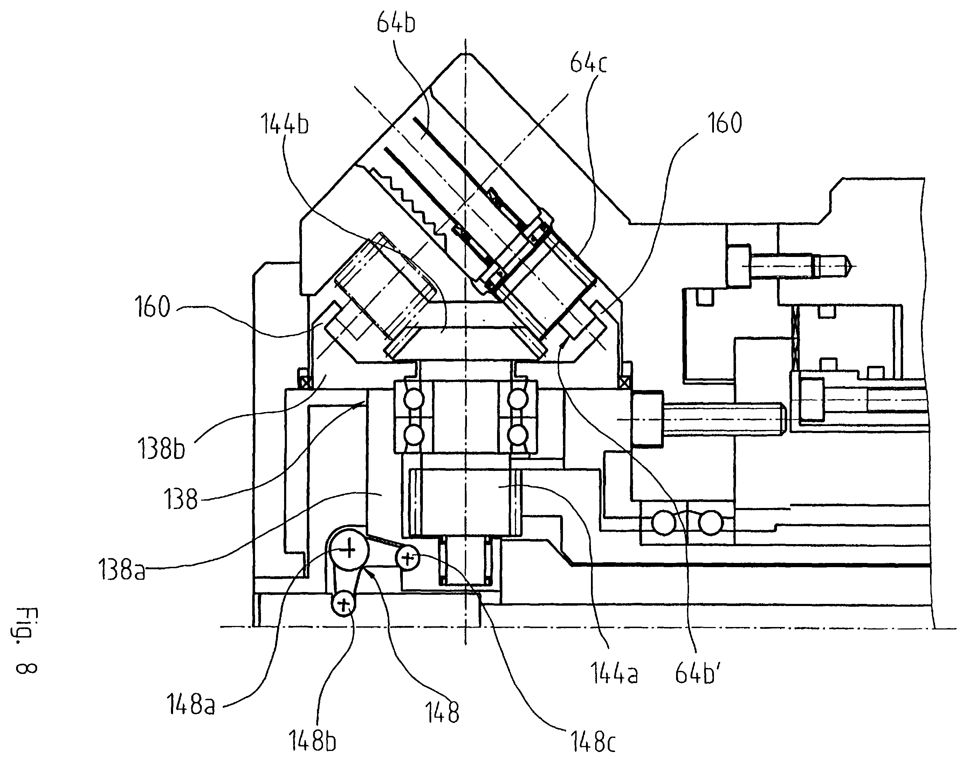

Mit dem bezüglich des Revolvergehäuses 42 stationären inneren Lagerrohr 108 ist in nicht näher dargestellter Weise ein Lagerkörper 134 fest verbunden. In eine mit der Revolver-schaltachse 46 koaxiale Bohrung 134a dieses Lagerkörpers ragt eine Schaltstange 136 hinein, welche durch das innere Lagerrohr 108 hindurchragt und in diesem sowie in der Lagerkörperbohrung 134a in Richtung der Revolverschaltachse 46 verschiebbar geführt ist; die Fig. 6 zeigt die Schaltstange 136 in ihrer rechten Endstellung, aus der sie sich z. B. mittels eines nicht dargestellten Druckmittelzylinders gemäß Fig. 6 nach links vorschieben läßt. Zu beiden Seiten der Schaltstange 136 ist in einer sich bezüglich der Revolverschaltachse 46 radial erstreckenden Führung 134b des Lagerkörpers 134 jeweils ein mehrteiliges Lagergehäuse 138 in dieser radialen Richtung verschiebbar geführt; es besteht aus einer in der Führung 134b geführten Lagerhülse 138a und einem an dieser befestigten Verriegelungskörper 138b. Mittels vom Lagergehäuse 138 gehaltener Wälzlager 140 und 142 ist in jedem der Lagergehäuse 138 eine bezüglich der Revolver-schaltachse 46 radial orientierte Antriebswelle 144 drehbar und axial unverschiebbar gelagert, wobei die beiden radialen Antriebswellen 144 gleich ausgebildet sind und ihre Achsen miteinander fluchten sowie in der in Fig. 4A angegebenen Mittelebene 62 des Revolverkopfs 44 liegen. Jede der radialen Antriebswellen 144 hat (siehe insbesondere Fig. 8) ein Zahnrad 144a mit einer Stirnverzahnung, welche sich ständig im Eingriff befindet mit der Kronradverzahnung 110a der Eintriebswelle 110, sowie an ihrem radial äußeren Ende ein Kegelrad 144b.

An jedem der Lagerkörper 134 ist ein Winkelhebel 148 so gelagert, daß er um eine quer zur Revolverschaltachse 46 verlaufende Achse 148a schwenken kann, und dieser Winkelhebel 148 greift mit Rollen 148b und 148c in entsprechend gestaltete Ausnehmungen an der Schaltstange 136 bzw. an der Lagerhülse 138a des zugeordneten Lagergehäuses 138 ein. Die Fig. 6 stellt nun einen Zustand dar, in dem die Lagergehäuse 138 und damit die radialen Antriebswellen 144 ihre radial äußeren Positionen einnehmen, dank der Kopplung der Schaltstange 136 mit den Lagergehäusen 138 über die beiden Winkelhebel 148 können die beiden Lagergehäuse und damit die beiden radialen Antriebswellen 144 jedoch in radialer Richtung nach innen zurückgezogen werden, indem die Schaltstange 136 gemäß Fig. 6 nach links bewegt wird.

In Fig. 6 sind zwei Werkzeugaufnahmen 56 und 56' dargestellt, jeweils mit einer ebenen Anlagefläche 54 und einer Aufnahmebohrung 58, deren Achse 60 senkrecht zur Anlagefläche 54 der betreffenden Werkzeugaufnahme 56 verläuft; die beiden Werkzeugaufnahmen 56 und 56' gehören zu verschiedenen Reihen von Werkzeugstationen, d. h. die Werkzeugaufnahme 56 gehört zu einer der Werkzeugstationen 50, die Werkzeugaufnahme 56' zu einer der Werkzeugstationen 52 des in den Figuren 4A und 4B dargestellten Werkzeugrevolvers. Allerdings liegt in der Realität die Werkzeugaufnahme 56' und damit die Achse 60 ihrer Aufnahmebohrung 58 hinter der Zeichnungsebene der Fig. 6 (siehe die Schnittlinien 6-6 und 6'-6 in Fig. 4B). Von den in die beiden Werkzeugaufnahmen 56 und 56' eingesetzten Bearbeitungswerkzeugen wurden jeweils nur ein Schaft 66a des Werkzeughalters 66 (siehe die Figuren 4A und 4B) sowie eine Werkzeugwelle 64b gezeichnet, welche mit einem der in den Figuren 4A und 4B dargestellten Werkzeuge 64 drehfest verbunden ist. Jede der Werkzeugwellen 64b trägt ein Zahnrad 64c, welches bei der bevorzugten Ausführungsform aus Kostengründen als Stirnrad ausgebildet ist, bei dem es sich jedoch auch um ein Kegelrad handeln könnte.

In der in Fig. 6 dargestellten Position der Schaltstange 136 befindet sich das Kegelrad 144b der oberen radialen Antriebswelle 144 im Eingriff mit dem Zahnrad 64c der oberen Werkzeugwelle 64b; wenn es sich bei dem in Fig. 6 dargestellten Revolverkopf 44 um denselben Revolverkopf handelt, welcher in den Figuren 4A und 4B dargestellt wurde, befindet sich das Kegelrad 144b der unteren radialen Antriebswelle 144 dann nicht im Eingriff mit dem Zahnrad 64c der unteren Werkzeugwelle 64b. Ist der in Fig. 6 dargestellte Revolverkopf 44 jedoch so ausgebildet, daß sich jeweils eine Werkzeugstation 50 der einen Werkzeugstationenreihe und eine Werkzeugstation 52 der anderen Werkzeugstationenreihe diagonal gegenüberliegen, so wie dies in Fig. 6 eigentlich dargestellt ist, wären in der in Fig. 6 gezeichneten Position der Schaltstange 136 beide in Fig. 6 dargestellten Werkzeugwellen 64b mit den beiden radialen Antriebswellen 144 gekuppelt; für einen derart gestalteten Revolverkopf 44 könnte anstelle zweier radialer Antriebswellen 144 auch eine einzige radiale Antriebswelle verwendet werden, welche zwischen drei Schaltpositionen hin- und hergeschoben werden kann, nämlich zwischen einer oberen, einer mittleren und einer unteren Schaltstellung - sie wäre dann in der oberen Schaltstellung mit der oberen Werkzeugwelle 64b gekuppelt, in der unteren Schaltstellung mit der unteren Werkzeugwelle 64b, und in der Mittelstellung befände sich keine Werkzeugwelle in Antriebsverbindung mit dieser radialen Antriebswelle.

Wird die Schaltstange 136 aus ihrer in Fig. 6 gezeichneten Position heraus nach links vorgeschoben, werden die Kegelräder 144b beider radialer Antriebswellen 144 in radialer Richtung nach innen so weit zurückgezogen, daß sich der Revolverkopf 44 um seine Schaltachse 46 drehen läßt, ohne daß eines der Zahnräder 64c der Werkzeugwellen 64b mit den Kegelrädern 144b kollidiert. Ferner soll noch einmal darauf hingewiesen werden, daß bei einem Revolverkopf 44, wie er in den Figuren 4A und 4B dargestellt wurde, in jeder Schaltstellung des Revolverkopfs 44 immer nur eine der Werkzeugwellen 64b angetrieben wird, da immer nur eines der Zahnräder 64c mit einem der Kegelräder 144b kämmen kann.

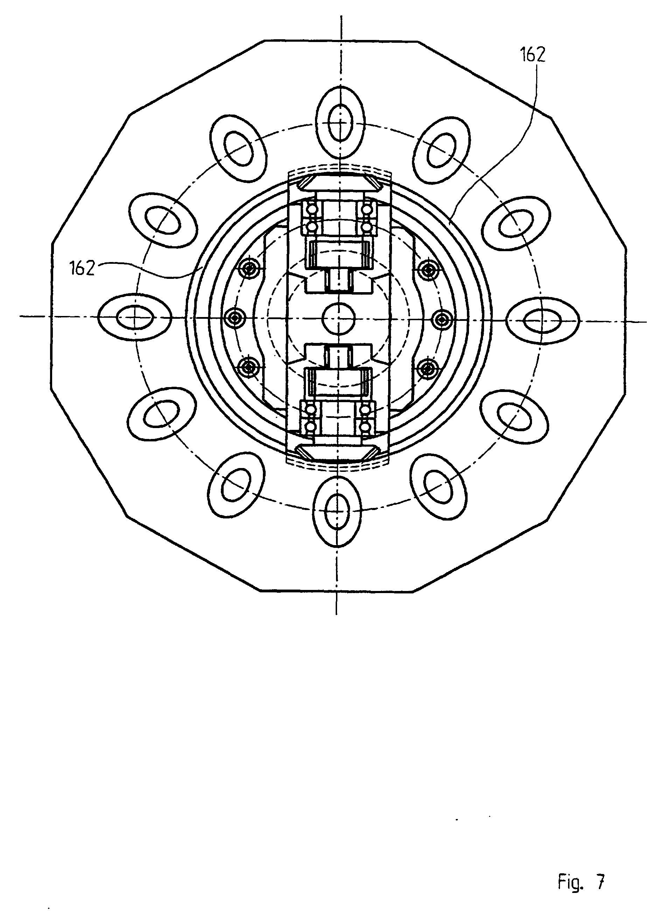

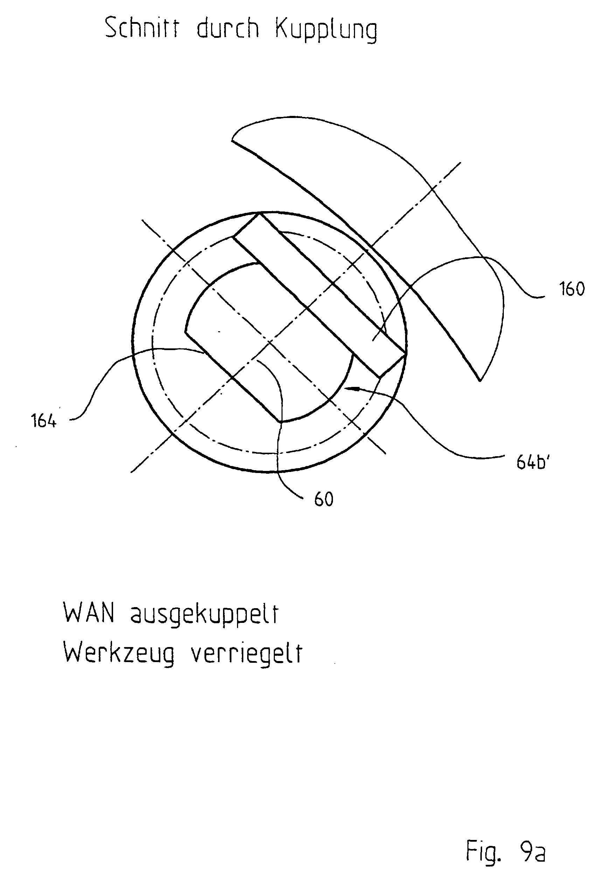

Wie bereits erwähnt wurde, müssen manche angetriebene Werkzeuge mit einer vorgegebenen Drehwinkelstellung zum Einsatz gebracht werden, z. B. Werkzeuge zur Herstellung von Gewinden. Da es zum Drehen des Revolverkopfs 44 um seine Schaltachse 46 erforderlich ist, die beiden Kegelräder 144b in radialer Richtung nach innen zurückzuziehen, und da alle angetriebenen Werkzeuge, welche sich nicht in Arbeitsstellung befinden, von den beiden radialen Antriebswellen 144 abgekuppelt sind, wurden bei der bevorzugten Ausführungsform des erfindungsgemäßen Werkzeugrevolvers Maßnahmen getroffen, um alle diejenigen Werkzeugwellen 64b, welche nicht in Antriebsverbindung mit der Eintriebswelle 110 stehen, gegen ein unbeabsichtigtes Verdrehen zu sichern. Diesem Zweck dienen die Verriegelungskörper 138b der beiden Lagergehäuse 138, diesen Verriegelungskörpern funktionsmäßig entsprechende und mit dem Gehäusekörper 100 fest verbundene Teile des Revolvergehäuses 42, sowie innere Endbereiche der Werkzeugwellen 64b mit nicht-kreisrundem Querschnitt. Diese Verdrehsicherungen sollen nun anhand der Figuren 6 bis 9B, insbesondere der Figuren 7 sowie 9A und 9B beschrieben werden.

Die Verriegelungskörper 138b verfügen jeweils über zwei Stege 160, an die sich in Fig. 7 dargestellte, kreisbogenförmige Stege 162 eines mit dem Gehäusekörper 100 in nicht dargestellter Weise fest verbundenen Teils des Revolvergehäuses 42 anschließen, wenn die Lagergehäuse 138 ihre radial innere, in Fig. 8 dargestellte Position einnehmen. Die Figuren 9A und 9B zeigen nun Stirnansichten eines inneren Endbereichs 64b' einer Werkzeugwelle 64b und lassen erkennen, daß die Wellenendbereiche 64b' an ihrem Umfang jeweils zwei einander gegenüberliegende Abflachungen 164 besitzen, deren eine jeweils mit einem der Stege 160 im Sinne einer Drehverriegelung der betreffenden Werkzeugwelle zusammenwirkt, wenn der betreffende Verriegelungskörper 138b seine radial innere Position einnimmt, in der das Zahnrad 64c der betreffenden Werkzeugwelle 64b sich nicht im Eingriff mit dem benachbarten Kegelrad 144b befindet. Wird dann der Revolverkopf 44 um seine Schaltachse 46 weitergedreht, wird die betreffende Werkzeugwelle 64b durch die Stege 162 an einem unbeabsichtigten Verdrehen gehindert. Während die Figuren 8 und 9A die Verriegelung der in Fig'. 6 oben dargestellten Werkzeugwelle 64b zeigen, nämlich denjenigen Zustand, in dem der in Fig. 6 oben dargestellte Verriegelungskörper 138b seine radial innere Stellung einnimmt, zeigt die Fig. 9B den in Fig. 6 dargestellten Zustand, in dem sich die in Fig. 6 oben dargestellte Werkzeugwelle 64b drehen läßt, weil der in Fig. 6 oben dargestellte Verriegelungskörper 138b seine radial äußere Stellung einnimmt.

Die Fig. 6 zeigt schließlich noch einen Revolverkopfdeckel 166, welcher sich mit dem Revolverkopf 44 drehen oder bezüglich des Revolvergehäuses 42 stationär sein kann.

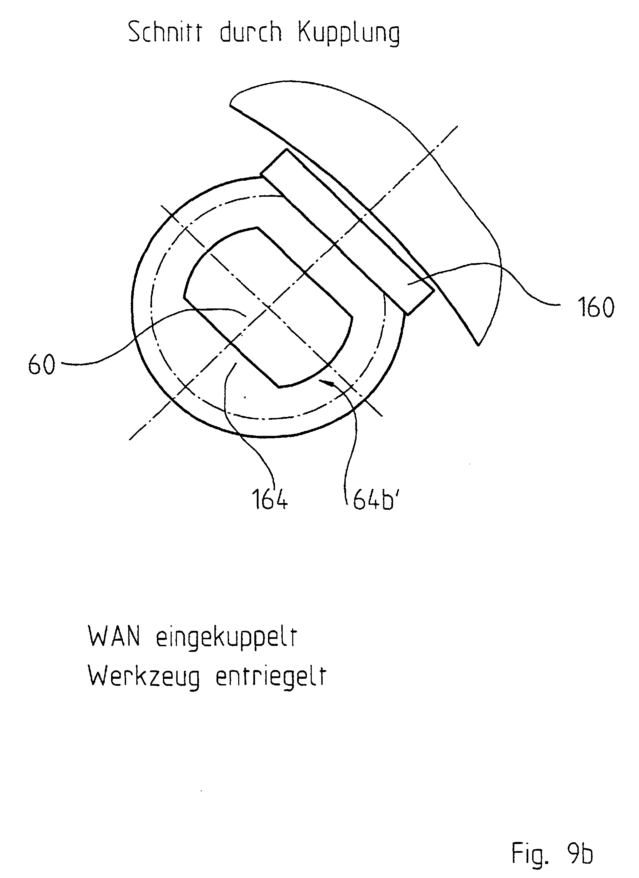

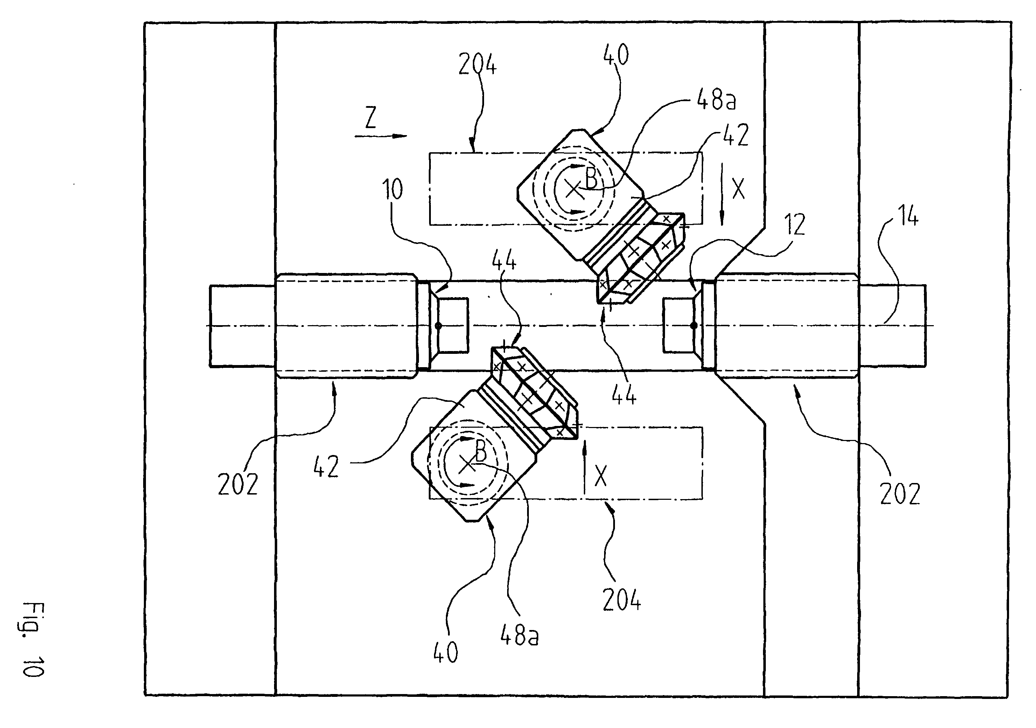

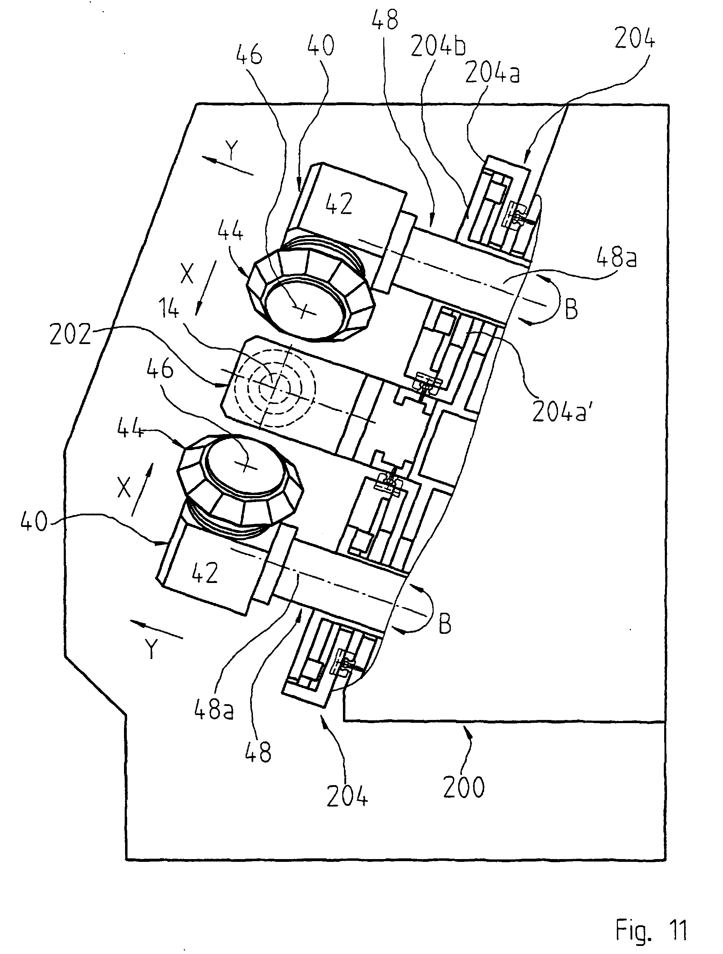

Die Figuren 10 und 11 zeigen die in den Figuren 5A bis 5C dargestellte, als Gegenspindelmaschine ausgebildete Drehmaschine vollständig, wenn auch stark vereinfacht, allerdings mit der Abwandlung, daß die Drehmaschine nach den Figuren 10 und 11 für jeden der beiden erfindungsgemäßen Werkzeugrevolver sowohl über eine B-Achse, als auch über eine Y-Achse verfügt, so wie dies anhand der Fig. 4A erläutert wurde. In die Figuren 10 und 11 wurden infolgedessen nicht nur die Richtung der Z-Achse, sondern für jeden der Werkzeugrevolver auch die Richtungen der X- und der Y-Achse sowie die B-Achse eingezeichnet. Soweit möglich, wurden in den Figuren 10 und 11 auch dieselben Bezugszeichen verwendet wie in den Figuren 4A und 5A bis 5C.

Die in den Figuren 10 und 11 dargestellte Drehmaschine verfügt über ein Maschinenbett 200, welches für jede der Werkstückspindeln 10 und 12 einen Spindelstock 202 trägt, in dem die betreffende Werkstückspindel um die beiden Spindeln gemeinsame Spindelachse 14 drehbar gelagert ist. Vor allem die Fig. 11 zeigt, wenn auch etwas schematisch, zwei Kreuzschlittensysteme 204, welche identisch ausgebildet sind und von denen jeweils eines einem der beiden Werkzeugrevolver 40 zugeordnet ist. Jedes der Kreuzschlittensysteme 204 hat einen sogenannten Bettschlitten 204a, der am Maschinenbett 200 in Richtung der Z-Achse verschiebbar geführt ist, sowie einen vom Bettschlitten getragenen sogenannten Oberschlitten 204b, welcher am Bettschlitten in Richtung der X-Achse verschiebbar geführt ist. In diesem Oberschlitten 204b ist die Säule 48 für den zu dem betreffenden Kreuzschlittensystem gehörenden Werkzeugrevolver 40 gelagert, und zwar sowohl in Richtung der Y-Achse verschiebbar, als auch um die B-Achse verdrehbar. Deshalb hat der Bettschlitten 204a eine langlochartige Öffnung 204a', durch die die Säule 48 samt ihrer am Oberschlitten 204b vorgesehenen Lagerung hindurchragt, und diese Öffnung 204a' hat in Richtung der X-Achse eine Längserstreckung entsprechend dem gewünschten maximalen Weg der Säule 48 in Richtung der X-Achse.

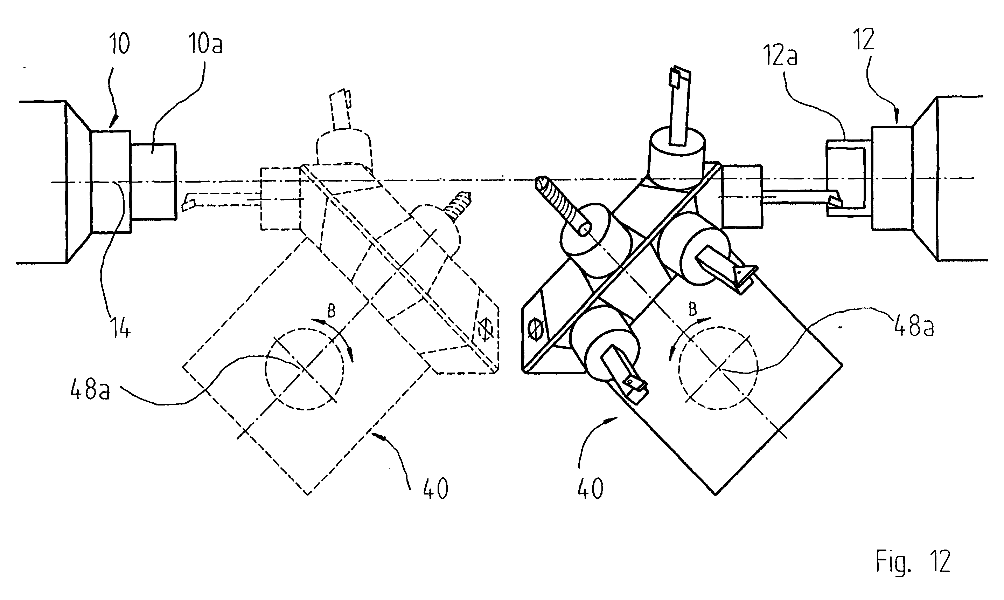

Wie sich aus Fig. 10 ohne weiteres ergibt, können dank der Tatsache, daß die Drehmaschine für jeden der beiden Werkzeugrevolver 40 über eine B-Achse verfügt, mit allen Werkzeugen eines jeden der beiden Werkzeugrevolver sowohl von der Werkstückspindel 10, als auch von der Werkstückspindel 12 gehaltene Werkstücke bearbeitet werden. Dies soll noch einmal anhand der Fig. 12 verdeutlicht werden, die einen der beiden Werkzeugrevolver 40 der in den Figuren 10 und 11 dargestellten Drehmaschine in zwei verschiedenen Stellungen sowie die beiden Werkstückspindeln 10 und 12 darstellt, von denen jede ein zu bearbeitendes bzw. gerade in Bearbeitung befindliches Werkstück 10a bzw. 12a hält. Hinsichtlich der Werkzeugbestückung des Werkzeugrevolvers kann auf die Figuren 5A bis 5C verwiesen werden, so daß diesbezüglich keine weitere Beschreibung der Fig. 12 erforderlich ist.

Die Figuren 5A bis 5C und 10 bis 12 lassen erkennen, daß sich auf einer sogenannten 4-Achsen-Drehmaschine mit zwei erfindungsgemäßen Werkzeugrevolvern, deren jeder von einem Kreuzschlittensystem getragen wird, alle heute von Drehmaschinen geforderten Bearbeitungsvorgänge durchführen lassen, und zwar mit von den Werkzeugrevolvern torsionsfrei gehaltenen Werkzeugen, die, wenn es sich um angetriebene Werkzeuge handelt, auch kein Winkelgetriebe im Werkzeughalter benötigen.

Außerdem ermöglicht die Verwendung eines erfindungsgemäßen Werkzeugrevolvers die Gestaltung des Arbeitsraums von Drehmaschinen in einer Art und Weise, daß sich besonders günstige geometrische Verhältnisse zwischen den Werkzeugrevolverköpfen und Revolvergehäusen einerseits und den Werkstückspindeln und den sie lagernden Spindelkästen andererseits ergeben. Auch lassen sich die am Maschinenbett vorzusehenden Führungen für die Kreuzschlittensysteme so günstig anordnen, daß besonders solide und funktionsgerechte Konstruktionen möglich werden, ohne Betrachtungen über Kollisionsprobleme anstellen zu müssen.

Bei Drehmaschinen mit einer B-Achse für einen erfindungsgemäßen Werkzeugrevolver führt letzterer zu deutlich kleineren Schwenkradien und Schwenkwinkel als beim Einsatz herkömmlicher Werkzeugrevolver, weil die sich nicht in Arbeitsposition befindlichen Werkzeuge schräg im Raum stehen und damit weniger Maschinenlänge benötigt wird, um den Werkzeugrevolver um die B-Achse schwenken zu können. Der Einsatz eines erfindungsgemäßen Werkzeugrevolvers führt auch dazu, daß der Schwenkwinkel um die B-Achse, welcher benötigt wird, um den zunächst an der einen Werkstückspindel eingesetzten Revolverkopf zu einer Gegenspindel hin zu orientieren, von 180° bei Verwendung eines Scheibenrevolvers auf 90° bei Verwendung eines erfindungsgemäßen Werkzeugrevolvers reduziert wird, und für die Werkzeuge beider Werkzeugstationenreihen eines erfindungsgemäßen Werkzeugrevolvers lassen sich alle benötigten Winkellagen mit gegenüber dem Stand der Technik halbierten Stellwinkeln erreichen.

**Patentansprüche**

1.  Werkzeugrevolver (40) für eine Werkzeugmaschine, mit einem Revolverkopf (44), welcher an einer Revolverkopf-Tragvorrichtung (42) des Werkzeugrevolvers (40) um eine Revolverschaltachse (46) drehbar gelagert und mittels einer Revolverkopf-Verriegelungsvorrichtung relativ zur Tragvorrichtung (42) in einer vorgegebenen Anzahl von bezüglich der Schaltachse (46) drehwinkelmäßig äquidistanten Schaltstellungen verriegelbar ist, sich zu beiden Seiten einer senkrecht zur Revolverschaltachse (46) verlaufenden Durchmesserebene (62) des Revolverkopfs (44) verjüngt und auf jeder Seite dieser Durchmesserebene (62) jeweils eine kreisringförmige, zur Schaltachse (46) konzentrische Reihe von drehwinkelmäßig äquidistanten Werkzeugstationen (50,52) besitzt, deren jede eine einer der Schaltstellungen zugeordnete Werkzeugaufnahme (56) zum Einspannen eines Werkzeughalters (66) für ein Bearbeitungswerkzeug (64) besitzt,
       wobei jede Werkzeugstation (50, 52) als Teil einer Schnittstelle zwischen Werkzeughalter (66) und Revolverkopf (44) eine von den Außenflächen des Revolverkopfs gebildete ebene Anlagefläche (54) für den betreffenden Werkzeughalter (66) aufweist, und
       die Anlageflächen (54) einer ersten Reihe von Werkzeugstationen (50) eine erste regelmäßige Pyramide (70) und die Anlageflächen (54) der anderen, zweiten Reihe von Werkzeugstationen (52) eine zweite regelmäßige Pyramide (72) definieren, wobei die beiden Pyramiden gleiche Gestalt sowie voneinander wegweisende Spitzen (70a, 72a) aufweisen und die Achse einer jeden Pyramide mit der Revolverschaltachse (46) zusammenfällt, so daß die beiden Pyramiden an der Durchmesserebene (62) des Revolverkopfs, von der die Pyramidenspitzen gleich große Abstände aufweisen, aneinandergrenzen, **dadurch gekennzeichnet,** daß

       (a) mindestens zwei der Werkzeugaufnahmen (56) zum Einspannen eines um eine Werkzeugachse (64a) drehantreibbaren Werkzeugs (64), dessen Werkzeughalter (66) eine Werkzeugantriebswelle (64b) zum Eingreifen in die betreffende Werkzeugaufnahme (56) aufweist, ausgebildet sind und eine Werkzeug-Antriebsvorrichtung (110, 144) für die Werkzeugantriebswellen (64b) vorgesehen ist;

       (b) jede Reihe von Werkzeugstationen (50, 52) mindestens eine Werkzeugaufnahme (56) für ein antreibbares Werkzeug (64) aufweist;

       (c) jede der Werkzeugaufnahmen (56) für antreibbare Werkzeuge (64) eine senkrecht zur Anlagefläche (54) der betreffenden Werkzeugstation (50, 52) verlaufende Achse (60) besitzt;

       (d) zwei einander benachbarte Werkzeugaufnahmen (56) für antreibbare Werkzeuge (64) zu verschiedenen Werkzeugstationenreihen gehören und bezüglich der Revolverschaltachse (46) drehwinkelmäßig gegeneinander versetzt sind, wobei die Achsen (60) dieser Werkzeugaufnahmen die Durchmesserebene (62) des Revolverkopfs (44) in Punkten durchdringen, welche auf einem zur Schaltachse konzentrischen Kreis liegen;

       (e) die Werkzeug-Antriebsvorrichtung mindestens eine senkrecht zur Revolverschaltachse (46) verlaufende Antriebswelle (144) aufweist, welche zum Kuppeln mit bzw. Abkuppeln von einer Werkzeugantriebswelle (64b) eines antreibbaren Werkzeugs (64) in ihrer Längsrichtung verschiebbar ist.

2.  Werkzeugrevolver nach Anspruch 1, dadurch gekennzeichnet, daß die Achse der Antriebswelle (144) der Werkzeug-Antriebsvorrichtung in der Durchmesserebene (62) des Revolverkopfs (44) liegt.

3. Werkzeugrevolver nach Anspruch 1 oder 2, dadurch gekennzeichnet, daß die Antriebswelle (144) der Werkzeug-Antriebsvorrichtung än ihrem von der Revolver-Schaltachse (46) abgewandten Endbereich mit einem Zahnrad in Form eines Kegelrads (144b) zum Kuppeln mit einem Zahnrad (64c) einer Werkzeugantriebswelle (64b) versehen ist.

4. Werkzeugrevolver nach Anspruch 3, dadurch gekennzeichnet, daß die Achsen (60) der Werkzeugaufnahmen (56) für antreibbare Werkzeuge (64) derart angeordnet sind, daß beim Drehen des Revolverkopfs (44) um seine Schaltachse (46) nacheinander am Zahnrad (144b) der Antriebswelle (144) der Werkzeugantriebsvorrichtung vorbeilaufende Werkzeugaufnahmeachsen (60) dieses Zahnrad abwechselnd auf seiner einen und seiner anderen Seite passieren.

5. Werkzeugrevolver nach einem oder mehreren der vorstehenden Ansprüche, gekennzeichnet durch einen an der Revolverkopf-Tragvorrichtung (42) in Achsrichtung der Antriebswelle (144) der Werkzeugantriebsvorrichtung verschiebbar gelagerten Lagerkörper (138), in dem die Antriebswelle (144) drehbar, jedoch axial unverschiebbar gelagert ist, sowie durch eine Antriebsschaltvorrichtung (136, 148) zum Verschieben des Lagerkörpers (138) zwischen einer Auskuppelstellung, in der die Antriebswelle (144) von allen Werkzeugantriebswellen (64b) abgekuppelt ist, und mindestens einer Einkuppelstellung, in der die Antriebswelle (144) mit einer Werkzeugantriebswelle (64b) gekuppelt ist.

6. Werkzeugrevolver nach Anspruch 5, gekennzeichnet durch eine sich längs der Revolverschaltachse (46) erstreckende und in deren Richtung hin- und herbewegbare Schaltstange (136), welche über ein um eine quer zur Revolver-Schaltachse (46) verlaufende Schwenkachse (148a) verschwenkbäres Koppelglied (148) mit dem Lagerkörper (138) gekoppelt ist.

7. Werkzeugrevolver nach einem oder mehreren der vorstehenden Ansprüche, dadurch gekennzeichnet, daß die Antriebswelle (144) der Werkzeug-Antriebsvorrichtung an ihrem Umfang mit einer Stirnverzahnung (144a) zum Antreiben der Antriebswelle (144) mittels einer Kronradverzahnung (110a) einer mit der Revolverschaltachse (46) koaxialen Eintriebswelle (110) versehen ist.

8. Werkzeugrevolver nach einem oder mehreren der vorstehenden Ansprüche, dadurch gekennzeichnet, daß jede Werkzeugstationenreihe (50, 52) mehrere Werkzeugaufnahmen (56) für antreibbare Werkzeuge (64) aufweist.

9. Werkzeugrevolver nach Anspruch 8, dadurch gekennzeichnet, daß die Anzahl der Werkzeugaufnahmen (56) für antreibbare Werkzeuge (64) einer jeden Werkzeugstationenreihe (50, 52) gleich der Hälfte der geradzahligen Anzahl N der Schaltstellungen ist, daß in jeder Werkzeugstationenreihe die Winkelabstände dieser Werkzeugaufnahmen (56) voneinander $\frac{720°}{N}$ betragen, und daß die Werkzeugaufnahmen (56) für antreibbare Werkzeuge (64) der einen Werkzeugstationenreihe (50) gegenüber den Werkzeugaufnahmen für antreibbare Werkzeuge der anderen Werkzeugstationen (52) bezüglich der Revolverschaltachse (46) drehwinkelmäßig um einen Winkel von $\frac{360°}{N}$ versetzt sind.

10. Werkzeugrevolver nach Anspruch 9, dadurch gekennzeichnet, daß jede Werkzeugstationenreihe (50, 52) zwischen ihren Werkzeugaufnahmen (56) für antreibbare Werkzeuge (64) Werkzeugaufnahmen für nicht-antreibbare Werkzeuge aufweist.

11. Werkzeugrevolver nach einem oder mehreren der vorstehenden Ansprüche, dadurch gekennzeichnet, daß die Durchmesserebene des Revolverkopfs (44) dessen Mittelebene (62) ist.

12. Werkzeugrevolver nach einem oder mehreren der vorstehenden Ansprüche, dadurch gekennzeichnet, daß die Seitenflächen einer jeden Pyramide (70, 72) mit der Revolver-schaltachse (46) jeweils einen Winkel von 45° bilden.

13. Drehmaschine mit einem Maschinenbett (200), mindestens einer um eine die Richtung einer Z-Achse der Drehmaschine definierende Spindelachse (14) drehbar gelagerten Werkzeugspindel (10,12), welche an ihrem einen Ende mit einer Werkstückspannvorrichtung zum Halten eines zu bearbeitenden Werkstücks versehen ist, mindestens einem Kreuzschlittensystem (204) mit wenigstens einem in Richtung der Z-Achse verschiebbar geführten Z-Schlitten (204a) und einem in Richtung einer senkrecht zur Z-Achse verlaufenden X-Achse verschiebbar geführten X-Schlitten (204b) sowie mit einem Werkzeugrevolverträger (48), welcher am Kreuzschlittensystem (204) um eine senkrecht zur Z- sowie zur X-Achse verlaufende B-Achse drehbar gelagert und somit in Richtung der Z- und der X-Achse verschiebbar gehalten ist, und wobei der Werkzeugrevolverträger (48) mit einem Werkzeugrevolver (40) nach einem oder mehreren der Ansprüche 1 bis 11 versehen ist.

**14.** Drehmaschine nach Anspruch 13, welche zwei koaxiale Werkstückspindeln (10, 12) mit einander zugewandten Werkstückspannvorrichtung sowie wenigstens zwei Kreuzschlittensystemen (204) aufweist, von denen jedes mit einem um eine B-Achse drehbaren, einen Werkzeugrevolver (44) tragenden Werkzeugrevolverträger (48) versehen ist, wobei die beiden Kreuzschlittensysteme derart angeordnet sind, daß mit Werkzeugen eines jeden der beiden Werkzeugrevolver sowohl von der einen, als auch von der anderen Werkstückspindel (10, 12) gehaltene Werkstücke bearbeitbar sind.

**15.** Drehmaschine mit einem Maschinenbett (200), zwei koaxialen Werkstückspindeln (10,12), welche um eine gemeinsame, die Richtung einer Z-Achse der Drehmaschine definierende Spindelachse (14) drehbar gelagert sowie jeweils mit einer Werkstückspannvorrichtung zum Halten eines zu bearbeitenden Werkstücks versehen sind und einander mit einander zugewandten Werkstückspannvorrichtungen gegenüberliegen, sowie mit zwei Kreuzschlittensystemen (204), von denen jedes. einen in Richtung Z-Achse verschiebbar geführten Z-Schlitten (204a) und einen in Richtung einer senkrecht zur Z-Achse verlaufenden X-Achse verschiebbar geführten X-Schlitten (204b) aufweist, und wobei jedes der beiden Kreuzschlittensysteme (204) einen Werkzeugrevolver (40) nach einem oder mehreren der Ansprüche 1 bis 11 trägt.

**16.** Drehmaschine nach Anspruch 15, wobei an wenigstens einem der beiden Kreuzschlittensysteme (204) ein um eine senkrecht zur Z-Achse sowie zur X-Achse verlaufende B-Achse drehbar gelagerter und somit in Richtung der Z- und der X-Achse verschiebbar gehaltener, einen Werkzeugrevolver (40) tragender Werkzeugrevolverträger (48) vorgesehen ist.

**17.** Drehmaschine nach Anspruch 15 oder 16, bei der die beiden Kreuzschlittensysteme (204) derart angeordnet sind, daß mit Werkzeugen eines jeden der beiden Werkzeugrevolver (40) sowohl von der einen (10), als auch von der anderen Werkstückspindel (12) gehaltene Werkstücke bearbeitbar sind.

**Claims**

**1.** Tool turret (40) for a machine tool, comprising a turret head (44) mounted on a turret head carrying device (42) of said tool turret (40) for rotation about a turret indexing axis (46) and lockable by means of a turret head locking device relative to said carrying device (42) in a predetermined number of indexing positions which are equidistant with respect to angle of rotation in relation to said indexing axis (46), said turret head tapering on both sides of a diameter plane (62) of said turret head (44) extending perpendicularly to said turret indexing axis (46), and said turret head having on each side of this diameter plane (62) a circular ring-shaped row of tool stations (50, 52) which are equidistant with respect to angle of rotation, said row of tool stations being concentric with said indexing axis (46), and each of said tool stations having a tool receiving means (56) associated with one of said indexing positions for clamping a toolholder (66) for a machining tool (64), with each tool station (50, 52) having as part of an interface between toolholder (66) and turret head (44) a planar contact surface (54) formed by the outer surfaces of said turret head for the respective toolholder (66), and the contact surfaces (54) of a first row of tool stations (50) defining a first regular pyramid (70), and the contact surfaces (54) of the other, second row of tool stations (52) a second regular pyramid (72), both pyramids having the same shape and apexes (70a, 72a) pointing away from one another, and the axis of each pyramid coinciding with said turret indexing axis (46) so that the two pyramids adjoin one another at said diameter plane (62) of the turret head, said pyramid apexes being equidistantly spaced from said diameter plane, **characterized in that**

(a) at least two of said tool receiving means (56) are designed for clamping a tool (64) rotatably drivable about a tool axis (64a), the toolholder (66) of said tool having a tool drive shaft (64b) for engaging the respective tool receiving means (56), and a tool driving device (110, 144) is provided for said tool drive shafts (64b);

(b) each row of tool stations (50, 52) has at least one tool receiving means (56) for a drivable tool (64);

(c) each of said tool receiving means (56) for drivable tools (64) has an axis (60) extending perpendicularly to said contact surface (54) of the respective tool station (50, 52);

(d) two adjacent tool receiving means (56) for drivable tools (64) belong to different rows of tool stations and are offset from one another with respect to angle of rotation in relation to said turret indexing axis (46), the axes (60) of these tool receiving means penetrating said diameter plane (62) of said turret head (44) at points which lie on a circle concentric with said indexing axis;

(e) said tool driving device has at least one drive shaft (144) extending perpendicularly to said turret indexing axis (46), said drive shaft being displaceable in the longitudinal direction thereof for coupling with and uncoupling from a tool drive shaft (64b) of a drivable tool (64).

2. Tool turret as defined in claim 1, characterized in that the axis of said drive shaft (144) of said tool driving device lies in said diameter plane (62) of said turret head (44).

3. Tool turret as defined in claim 1 or 2, characterized in that said drive shaft (144) of said tool driving device is provided at its end region facing away from said turret indexing axis (46) with a toothed gear in the form of a bevel gear (144b) for coupling with a toothed gear (64c) of a tool drive shaft (64b).

4. Tool turret as defined in claim 3, characterized in that said axes (60) of said tool receiving means (56) for drivable tools (64) are arranged such that upon rotation of said turret head (44) about its indexing axis (46), axes (60) of said tool receiving means moving one after the other past said toothed gear (144b) of said drive shaft (144) of said tool driving device pass this toothed gear alternately on its one and its other side.

5. Tool turret as defined in any one or several of the preceding claims, characterized by a bearing body (138) mounted on said turret head carrying device (42) for displacement in the axial direction of said drive shaft (144) of said tool driving device, said drive shaft (144) being rotatably, but axially immovably mounted in said bearing body, and by a drive shifting device (136, 148) for displacement of said bearing body (138) between an uncoupling position in which said drive shaft (144) is uncoupled from all tool drive shafts (64b) and at least one coupling position in which said drive shaft (144) is coupled with a tool drive shaft (64b).

6. Tool turret as defined in claim 5, characterized by a shifting rod (136) extending along said turret indexing axis (46) and movable back and forth in the direction thereof, said shifting rod being coupled with said bearing body (138) via a coupling member (148) pivotable about a pivot axis (148a) extending transversely to said turret indexing axis (46).

7. Tool turret as defined in any one or several of the preceding claims, characterized in that said drive shaft (144) of said tool driving device is provided at its circumference with a spur gear toothing (144a) for driving said drive shaft (144) by means of a crown gear toothing (110a) of an input shaft (110) coaxial with said turret indexing axis (46).

8. Tool turret as defined in any one or several of the preceding claims, characterized in that each row (50, 52) of tool stations has several tool receiving means (56) for drivable tools (64).

9. Tool turret as defined in claim 8, characterized in that the number of tool receiving means (56) for drivable tools (64) of each row (50, 52) of tool stations is equal to half of the even-numbered number N of indexing positions, in that in each row of tool stations the angular spacings of these tool receiving means (56) from one another are $\frac{720°}{N}$, and in that said tool receiving means (56) for drivable tools (64) of said one row (50) of tool stations are offset from said tool receiving means for drivable tools of said other row (52) of tool stations with respect to angle of rotation by an angle of $\frac{360°}{N}$ in relation to said turret indexing axis (46).

10. Tool turret as defined in claim 9, characterized in that each row (50, 52) of tool stations has between its tool receiving means (56) for drivable tools (64) tool receiving means for non-drivable tools.

11. Tool turret as defined in any one or several of the preceding claims, characterized in that said diameter plane of said turret head (44) is its center plane (62).

12. Tool turret as defined in any one or several of the preceding claims, characterized in that the side faces of each pyramid (70, 72) each form an angle of 45° with said turret indexing axis (46).

13. Lathe comprising a machine bed (200), at least one tool spindle (10, 12) mounted for rotation about a spindle axis (14) defining the direction of a Z-axis of said lathe, said tool spindle being provided at its one end with a tool clamping device for holding a workpiece to be machined, at least one compound slide system (204) with at least one Z-slide (204a) guided for displacement in the direction of the Z-axis and an X-slide (204b) guided for displacement in the direction of an X-axis extending perpendicularly to the Z-axis, and further comprising a tool turret carrier (48) mounted on said compound slide system (204) for rotation about a B-axis extending perpendicularly to the Z-axis and to the X-axis and hence held for displacement in the direction of the Z-axis and the X-axis, said tool turret carrier (48) being provided with a tool turret (40) as defined in any one or several of claims 1 to 11.

14. Lathe as defined in claim 13, comprising two coaxial workpiece spindles (10, 12) with workpiece clamping devices facing one another and at least two compound slide systems (204), each of which is provided with a tool turret carrier (48) carrying a tool turret (40) and rotatable about a B-axis, both of said compound slide systems being arranged such that both workpieces held by the one workpiece spindle (10) and workpieces held by the other workpiece spindle (12) are machinable with tools of each of said two tool turrets.

15. Lathe comprising a machine bed (200), two coaxial workpiece spindles (10, 12) mounted for rotation about a common spindle axis (14) defining the direction of a Z-axis of said lathe, and each provided with a workpiece clamping device for holding a workpiece to be machined, said workpiece spindles being arranged opposite each other with workpiece clamping devices facing one another, and further comprising two compound slide systems (204), each of which has a Z-slide (204a) guided for displacement in the direction of the Z-axis and an X-slide (204b) guided for displacement in the direction of an X-axis extending perpendicularly to the Z-axis, with each of said two compound slide systems (204) carrying a tool turret (40) as defined in any one or several of claims 1 to 11.

16. Lathe as defined in claim 15, wherein a tool turret carrier (48) carrying a tool turret (40) and mounted for rotation about a B-axis extending perpendicularly to the Z-axis and to the X-axis and hence held for displacement in the direction of the Z-axis and the X-axis is provided at least at one of said two compound slide systems (204).

17. Lathe as defined in claim 15 or 16, wherein said two compound slide systems (204) are arranged such that workpieces held by the one workpiece spindle (10) and workpieces held by the other workpiece spindle (12) are machinable with tools of each of said two tool turrets (40).

**Revendications**

1. Tourelle porte-outils (40) pour une machine-outil comportant une tête (44), qui est montée sur un dispositif (42) de support de la tourelle porte-outils (40) de manière à pouvoir tourner autour d'un axe de commutation (46) de la tourelle et peut être verrouillée au moyen d'un dispositif de verrouillage de la tête de la tourelle, par rapport au dispositif de support (42) dans un nombre prédéterminé de positions de commutation équidistantes angulairement par rapport à l'axe de commutation (46), se rétrécit des deux côtés d'un plan diamétral (62) de la tête (44) de la tourelle, qui s'étend perpendiculairement à l'axe de commutation (46) de la tourelle, et possède respectivement de chaque côté de ce plan diamétral (62) une succession, disposée selon une forme en anneau circulaire et concentrique par rapport à l'axe de commutation (46), de postes d'outils (50,52) équidistants angulairement et dont chacun possède un logement (56) pour outil, qui est associé à l'une des positions de commutation, pour le serrage d'un porte-outil (66) pour un outil d'usinage (64), et dans lequel chaque poste d'outil (50,52) possède, en tant que partie d'une interface entre le porte-outil (66) et la tête (44) de la tourelle, une surface plane d'application (54), formée par les faces extérieures de la tête de la tourelle, pour le porte-outil considéré (66), et les surfaces d'application (54) d'une première série de postes d'outils (50) définissent une première pyramide régulière (70) et les surfaces d'application (54) de l'autre, c'est-à-dire de la seconde série de postes d'outils (51), définissent une seconde pyramide régulière (72), les deux pyramides possédant la même forme et des pointes (70a,72a) qui s'écartent l'une de l'autre, et l'axe de chaque pyramide coïncidant avec l'axe de commutation (46) de la tourelle de sorte que les deux pyramides sont contiguës au niveau du plan diamétral (62) de la tête de la tourelle, par rapport auquel les pointes des pyramides sont situées à des distances identiques,

    caractérisée en ce que

(a) au moins deux des logements (56) pour outil, servant à serrer un outil (64), qui peut être entraîné en rotation autour d'un axe (64a) de l'outil et dont le porte-outil (66) comporte un arbre (64b) d'entraînement de l'outil, destiné à s'engager dans le logement concerné (56) de l'outil, sont formés, et qu'il est prévu un dispositif (110,144) d'entraînement des outils pour les arbres (64b) d'entraînement des outils,

(b) chaque série de postes d'outils (50,52) comporte au moins un logement d'outil (56) pour un outil (64) pouvant être entraîné ;

(c) chacun des logements (56) pour outils pour des outils (64) pouvant être entraînés possède un axe (60) qui est perpendiculaire à la surface d'application (54) du poste d'outil considéré (50,52);

(d) deux logements (56), voisins l'un de l'autre, pour des outils (64) pouvant être entraînés font partie de deux séries différentes de postes d'outils et sont décalés angulairement l'un par rapport à l'autre autour de l'axe de commutation (46) de la tourelle, les axes (60) de ces logements pour outils traversant le plan diamétral (62) de la tête (44) de la tourelle en des points qui sont situés sur un cercle concentrique à l'axe de commutation;

(e) le dispositif d'entraînement d'outil comporte au moins un arbre d'entraînement (144) qui est perpendiculaire à l'axe de commutation (46) de la tourelle et qui est déplaçable dans sa direction longitudinale, pour l'accouplement à un arbre (64b) d'un outil (64) pouvant être entraîné, et pour le désaccouplement par rapport à cet arbre.

2. Tourelle porte-outils selon la revendication 1, caractérisée en ce que l'axe de l'arbre d'entraînement (140) du dispositif d'entraînement d'outils est situé dans le plan diamétral (62) de la tête (44) de la tourelle.

3. Tourelle porte-outils selon la revendication 1 ou 2, caractérisée en ce que l'arbre d'entraînement (140) du dispositif d'entraînement d'outils comporte, dans sa partie d'extrémité éloignée de l'axe de commutation (46) de la tourelle, une roue dentée agencée sous la forme d'un pignon conique (144b) pour l'accouplement à un pignon (64c) d'un arbre (64b) d'entraînement d'outils.

4. Tourelle porte-outils selon la revendication 3, caractérisée en ce que les axes (60) des logements (56) pour des outils (64) pouvant être entraînés sont disposés de telle sorte que lors de la rotation de la tête porte-outil (44) autour de son axe de commutation (46), des axes (60) de logement d'outils, qui passent successivement devant le pignon (144b) de l'arbre d'entraînement (144) du dispositif d'entraînement en rotation, s'étendant alternativement d'un côté et de l'autre de ce pignon.

5. Tourelle porte-outils selon une ou plusieurs des revendications précédentes, caractérisée par un corps de palier (138), qui est monté de manière à être déplaçable sur le dispositif (42) de support de la tête de la tourelle dans la direction axiale de l'arbre d'entraînement (144) du dispositif d'entraînement d'outils, et dans lequel l'arbre d'entraînement (144) peut tourner, tout en étant supporté de manière à être immobile axialement, ainsi que par un dispositif de commutation d'entraînement (136,148) servant à déplacer le corps de palier (138) entre une position de désaccouplement, dans laquelle l'arbre d'entraînement (144) est désaccouplé de tous les arbres (64b) d'entraînement d'outils, et au moins une position d'accouplement, dans laquelle l'arbre d'entraînement (144) est accouplé à un arbre (64b) d'entraînement d'outil.

6. Tourelle porte-outils selon la revendication 5, caractérisée par un bord de commutation (136), qui s'étend le long de l'axe de commutation (46) de la tourelle, est déplaçable en va-et-vient dans la direction de cet axe et est accouplé au corps de palier (138) par l'intermédiaire d'un organe d'accouplement (148) qui peut pivoter autour d'un axe de pivotement (148a) qui s'étend transversalement par rapport à l'axe de commutation (46) de la tourelle.

7. Tourelle porte-outils selon une ou plusieurs des revendications précédentes, caractérisée en ce que l'arbre d'entraînement (144) du dispositif d'entraînement d'outils comporte, sur sa périphérie, une denture droite (144a) servant à entraîner l'arbre d'entraînement (144) au moyen d'une denture de couronne dentée (110a) d'un arbre d'entraînement (110) coaxial à l'axe de commutation (46) de la tourelle.

8. Tourelle porte-outils selon une ou plusieurs des revendications précédentes, caractérisée en ce que chaque série (50,52) de postes d'outils comporte plusieurs logements (56) pour des outils (64) pouvant être entraînés.

9. Tourelle porte-outils selon la revendication 8, caractérisée en ce que le nombre de logements (56) pour des outils (64) pouvant être entraînés d'une série (50,52) de postes d'outils est égal à la moitié du nombre pair (N) des positions de commutation, que dans chaque série de postes d'outils les distances angulaires réciproques de ces logements (56) pour outils sont égales à 720°/N et que les logements (56) pour des outils (64) pouvant être entraînés d'une série (50) de postes d'outils sont décalés angulairement d'un angle de 360°/N par rapport aux logements pour des outils pouvant être entraînés des autres postes d'outils (52), autour de l'axe de commutation de la tourelle.

10. Tourelle porte-outils selon la revendication 9, caractérisé en ce que chaque série (50,52) de postes d'outils comporte entre ses logements (56) pour des outils (64) pouvant être entraînés, des logements pour des outils ne pouvant pas être entraînés.

11. Tourelle porte-outils selon une ou plusieurs des revendications précédentes, caractérisée en ce que le plan diamétral de la tête (44) de la tourelle est son plan médian (62).

12. Tourelle porte-outils selon une ou plusieurs des revendications précédentes, caractérisée en ce que les surfaces latérales de chaque pyramide (70,72) font, avec l'axe de commutation (46) de la tourelle, un angle respectif de 45°.

13. Tour comportant un banc de machine (20), possédant un moins une broche d'outil (10,12), qui est montée de manière à pouvoir tourner autour d'un axe de broche (14) définissant la direction d'un axe Z du tour et qui comporte, au niveau de l'une de ses extrémités, un dispositif de serrage de pièce à usiner servant à retenir une pièce à usiner, et comportant au moins un système (204) de chariots à déplacements croisés comportant au moins un chariot (204a) déplaçable dans la direction Z qui est guidé en étant déplaçable dans la direction de l'axe Z, et un chariot (204b) déplaçable dans une direction X guidé en étant déplaçable dans la direction d'un axe X perpendiculaire à l'axe Z, ainsi qu'un support (48) de tourelle porte-outils, qui est monté de manière à pouvoir tourner sur le système (204) de chariots à déplacements croisés, autour d'un axe B perpendiculaire à l'axe Z et à l'axe X et est retenu par conséquent de manière à être déplaçable dans la direction de l'axe Z ou de l'axe X, et dans lequel le support (48) de la tourelle porte-outils est équipé d'une tourelle porte-outils (40) selon une ou plusieurs des revendications 1 à 11.

14. Tour selon la revendication 13, qui comporte deux broches coaxiales (10,12) de support de pièces à usiner, comportant des dispositifs de serrage de pièces à usiner, tournés l'un vers l'autre, ainsi que deux systèmes à chariots croisés (204), dont chacun est pourvu d'un support (48) de tourelle porte-outils, qui peut tourner autour d'un axe B et porte une tourelle porte-outils (44), les deux systèmes de chariots croisés étant disposés de telle sorte qu'avec des outils de chacune des deux tourelles porte-outils, on peut usiner des pièces à usiner portées aussi bien par l'une que par l'autre des broches (10,12) de support de pièces à usiner.

15. Tour comportant un banc de machine (200), deux broches coaxiales (10,12) de support de pièces à usiner, qui sont montées de manière à pouvoir tourner autour d'un axe de broche commun (14), qui définit la direction d'un axe Z du tour, et sont équipées chacune d'un dispositif de serrage de pièce à usiner pour retenir une pièce à usiner et sont situées réciproquement en vis-à-vis avec des dispositifs de serrage de pièces à usiner qui sont tournés l'un vers l'autre, ainsi que deux systèmes à chariots croisés (204), dont chacun comporte un chariot (204a) déplaçable suivant la direction Z, guidés de manière à être déplaçables dans la direction de l'axe Z, et un chariot (204b) déplaçable suivant la direction X guidé de manière à être déplaçable dans la direction d'un axe X qui est perpendiculaire à l'axe Z, et dans lequel chacun des deux systèmes à chariots croisés (204) comporte une tourelle porte-outils (40) selon une ou plusieurs des revendications 1 à 11.

16. Tour selon la revendication 15, dans laquelle sur au moins l'un des deux systèmes à chariots croisés (204) il est prévu un support (48) de tourelle porte-outils, qui est monté de manière à pouvoir tourner autour d'un axe B perpendiculaire à l'axe Z ainsi qu'à l'axe X, est retenu, avec possibilité de déplacement, dans la direction de l'axe Z ou de l'axe X, et porte une tourelle porte-outil (40).

17. Tour selon la revendication 15 ou 16, dans laquelle les deux systèmes à chariots croisés (204) sont disposés de telle sorte qu'avec l'un des outils de chacune des deux tourelles porte-outils (40), on peut usiner des pièces à usiner portées aussi bien par une broche (10) de support de pièce à usiner que par l'autre broche (12) de support de pièce à usiner.

Fig. 1

Sternrevolver

Scheibenrevolver Fig. 2

EP 0 901 857 B1

Kronenrevolver                    Fig. 3

EP 0 901 857 B1

Fig. 4a

EP 0 901 857 B1

Fig. 4b

Fig. 5a

EP 0 901 857 B1

44 $\underline{I}$

82 $\underline{I}$

80 $\underline{I}$

10a

80 $\underline{II}$

82 $\underline{II}$

12a

44 $\underline{II}$

Fig. 5b

Fig. 5c

EP 0 901 857 B1

Fig. 6

162
162

Fig. 7

28

Fig. 8

Schnitt durch Kupplung

160

164

64b'

60

WAN ausgekuppelt
Werkzeug verriegelt

Fig. 9a

Schnitt durch Kupplung

60

160

164    64b'

WAN eingekuppelt
Werkzeug entriegelt

Fig. 9b

Fig. 10

Fig. 11

Fig. 12

EP 0 901 857 B1